# EUROPÄISCHE PATENTANMELDUNG

(11) **EP 2 985 411 A1**
(43) Veröffentlichungstag der Anmeldung: **17.02.2016**
(21) Anmeldenummer: 15169512.9
(22) Anmeldetag: 18.01.2012
(51) Int. Cl.: F01B 3/00, F02B 75/26, F02G 3/02, F02M 26/00, F23C 6/04, F23G 7/06, F02G 5/02, F28D 21/00, F28F 9/02, F23C 5/32, F23D 11/44, F23K 5/20

(54) **AXIALKOLBENMOTOR SOWIE VERFAHREN ZUM BETRIEB EINES AXIALKOLBENMOTORS**

(30) Priorität: 19.01.2011 DE 102011008957; 27.04.2011 DE 102011018846
(62) Teilanmeldung aus: 12724543.9
(71) Anmelder: GETAS Gesellschaft für thermodynamische Antriebssysteme mbH, 52351 Düren (DE)
(72) Erfinder: Voigt, Dieter, 52074 Aachen (DE); Rohs, Ulrich, 52351 Düren (DE)
(74) Vertreter: Reuther, Martin

(57) **Zusammenfassung**

Um ein verbessertes Betriebs- und Regelverhalten auch unter instationären Betriebsbedingungen bereitzustellen, kann alternativ bzw. kumulativ zu den voranstehenden Merkmalen der Erfindung ein Axialkolbenmotor (1) mit einem Wärmeübertrager (81), welcher einen Abgasstrom und einen von dem Abgasstrom getrennten Arbeitsgasstrom aufweist, welcher Wärme vom Abgasstrom auf den Arbeitsgasstrom überträgt, welcher eine Längsachse aufweist und welcher eine entlang der Längsachse verlaufende Arbeitsgaskammer (84) aufweist, sich dadurch auszeichnen, dass ein Gehäuse (82), die Arbeitsgaskammer (84) und/oder die Abgaskammer (83) des Wärmeübertragers (81) an einem ersten Ende ihrer Längserstreckung mechanisch starr und an einem zweiten Ende ihrer Längserstreckung mechanisch elastisch miteinander gekoppelt sind. Die elastische Kopplung kann darüber hinaus eine metallische Membran (86) aufweisen.

## Beschreibung

Die Erfindung betrifft einen Axialkolbenmotor sowie ein Verfahren zum Betrieb eines Axialkolbenmotors.

Axialkolbenmotoren sind aus dem Stand der Technik hinlänglich bekannt und zeichnen sich als energiewandelnde Maschinen mit einer inneren kontinuierlichen Verbrennung aus. Hierbei fördert eine Verdichterstufe des Axialkolbenmotors mit axial zu einer Antriebswelle angeordneten sowie oszillierenden Kolben verdichtete Luft zu einer Expanderstufe mit ebenfalls axial zu einer Antriebswelle angeordneten sowie oszillierenden Kolben. Mechanische Antriebsenergie wird sodann an der Abtriebswelle des Axialkolbenmotors zur Verfügung gestellt, während der verdichteten Luft Brennstoff zwischen der Verdichterstufe und der Expanderstufe zugeführt, das Brennstoff-Luft-Gemisch verbrannt und mittels des hieraus entstehenden Abgases unter Volumenvergrößerung innerhalb der Expanderstufe positive Kolbenarbeit bereitgestellt wird.

So zeigt beispielsweise die noch nicht veröffentlichte PCT/DE 2010/000874 eine nach diesem Wirkprinzip arbeitende Kraftmaschine. Die Wärmefreisetzung des Brennstoffes erfolgt hierbei nicht, wie bei intermittierend arbeitenden Kraftmaschinen, innerhalb eines Zylinders durch Verbrennung einer abgeschlossenen Ladung, sondern innerhalb eines kontinuierlich arbeitenden Brenners. Diese für Axialkolbenmotoren verwendeten Brenner weisen ein an einen Brennraum angeschlossenes Mischrohr auf, in welchem der zu verbrennende Brennstoff und die von der Verdichterstufe geförderte Luft vermischt und unter Bildung einer stationären Flamme am Ende des Mischrohres verbrannt werden. Zur Stabilisierung der Verbrennung weist ein Axialkolbenmotor nach dem Stand der Technik zusätzlich einen Vorbrenner auf, mittels welchem ein weitgehend inertes Heißgas dem Brennstoff vor Eintritt in das Mischrohr zugesetzt wird. Dies bewirkt wiederum eine Aufbereitung des Brennstoffes.

Zwar ist im Stand der Technik das Aufbereiten des Brennstoffes innerhalb des Brenners auch über Heizmittel, wie beispielsweise Glühkerzen, bekannt, jedoch hat sich in der Praxis ein Zumischen von weitgehend inertem Heißgas, wie beispielsweise schon verbrannte Luft oder ein Gas mit λ ≤ 0, bewährt. Insofern wird zur Erzeugung eines weitgehend inerten Heißgases dem Brenner eines Axialkolbenmotors ein weiterer Vorbrenner vorgeschaltet, welcher wiederum Brennstoff mit Frischluft kontinuierlich verbrennt und das hieraus entstehende Heißgas dem eigentlichen als Hauptbrenner verwendeten Brenner zuführt. Hierbei offenbart die noch nicht veröffentlichte PCT/DE 2010/000874, dass es vorteilhaft ist, selbst den Brennstoff, der dem Vorbrenner zugeführt wird, zuvor beispielsweise mittels Glühkerzen, aufzubereiten.

Bei höheren Anforderungen an die Regelbarkeit und insbesondere bei pulsierendem Strom innerhalb der Gesamtanordnung aus Hauptbrenner und Vorbrenner, wobei Pulsationen wegen des Ladungswechsels in der Expanderstufe trotz kontinuierlicher Verbrennung auftreten, hat diese Anordnung mit einem Vorbrenner und einem Hauptbrenner nach dem oben genannten Stand der Technik Nachteile in der Flammstabilität. Bei pulsierendem Betrieb oder anderweitigen instationären Betriebsbedingungen des Brenners bzw. des Axialkolbenmotors oder aber auch bei Betriebspunktsprüngen können Zustände im Vorbrenner oder im Hauptbrenner auftreten, welche sogar zum Erlöschen der jeweiligen Flamme führen.

Es ist daher Aufgabe vorliegender Erfindung, einen Axialkolbenmotor mit einem verbesserten Betriebs- und Regelverhalten auch unter instationären Betriebsbedingungen bereitzustellen. Diese Aufgabe wird durch einen Axialkolbenmotor mit den Merkmalen des Anspruchs 1 gelöst.

So ermöglicht ein Axialkolbenmotor mit wenigstens einem Hauptbrenner, der wenigstens einen Hauptbrennraum sowie wenigstens einen Hauptdüsenraum aufweist, und mit wenigstens einem Vorbrenner, der wenigstens einen Vorbrennraum sowie wenigstens einen Vordüsenraum aufweist, ein verbessertes Betriebs- und Regelverhalten auch unter instationären Betriebsbedingungen, wenn über wenigstens eine Heißgaszuführung der Vorbrennraum an dem Hauptdüsenraum angeschlossen ist und der Axialkolbenmotor sich dadurch auszeichnet, dass der Vordüsenraum des Vorbrenners wenigstens eine Hilfsheißgaszuführung aufweist.

Insofern ermöglicht die Hilfsheißgaszuführung innerhalb des Vordüsenraumes den einem Vormischrohr zugeführten Brennmittelstrom aufzubereiten, so dass eine wesentlich stabilere Flamme am Ausgang des Vormischrohres erzeugt wird und somit der Vorbrenner einerseits durch die Aufbereitung des Brennstoffes schadstoffarm betrieben werden kann und andererseits der Vorbrenner gegenüber Pulsationen im Vorbrennraum sowie gegenüber geänderten Betriebsbedingungen wesentlich unempfindlicher ist.

Es wird zudem ein Verfahren zum Betrieb eines Axialkolbenmotors mit wenigstens einem Hauptbrenner und wenigstens einem Vorbrenner vorgeschlagen, wobei einem Hauptbrennstoffstrom des Hauptbrenners ein Abgasstrom des Vorbrenners zugemischt wird und sich das Verfahren dadurch auszeichnet, dass einem Vorbrennstoffstrom des Vorbrenners ein Abgasstrom zugemischt wird. Auch hierbei werden vorteilhaft eine stabilere Flammenbildung und ein wesentlich besseres Schadstoffverhalten, wie vorstehend erläutert, erreicht.

Zur Bildung einer stabilen Flamme im Haupt- sowie auch im Vorbrenner eines Axialkolbenmotors und für ein besseres Schadstoffverhalten eines Axialkolbenmotors wird alternativ bzw. kumulativ zu den voranstehenden Ausgestaltungen und Verfahren zum Betrieb eines Axialkolbenmotors ein weiteres Verfahren zum Betrieb eines Axialkolbenmotors mit wenigstens einer Verdichterstufe, mit wenigstens einem Hauptbrenner und mit wenigstens einem Vorbrenner vorgeschlagen, wobei die Verdichterstufe dem Hauptbrenner einen Hauptluftstrom sowie dem Vorbrenner einen Vorluftstrom zuführt und wobei einem Hauptbrennstoffstrom des Hauptbrenners ein Abgasstrom aus dem Vorbrenner zugemischt wird und sich das Verfahren dadurch auszeichnet, dass der dem Hauptbrennstoffstrom zugemischte Abgasstrom aus dem Vorluftstrom und einem Vorbrennstoffstrom gebildet wird.

Weiterhin wird alternativ bzw. kumulativ ein Verfahren zum Betrieb eines Axialkolbenmotors mit wenigstens einer Verdichterstufe, mit wenigstens einem Hauptbrenner und mit wenigstens einem Vorbrenner vorgeschlagen, wobei die Verdichterstufe dem Hauptbrenner einen Hauptluftstrom sowie dem Vorbrenner einen Vorluftstrom zuführt, wobei einem Hauptbrennstoffstrom des Hauptbrenners ein Abgasstrom aus dem Vorbrenner zugemischt wird und wobei sich das Verfahren dadurch auszeichnet, dass ein Verbrennungsluftverhältnis zwischen einem Vorbrennstoffstrom sowie dem Vorluftstrom und ein Verbrennungsluftverhältnis zwischen dem Hauptbrennstoffstrom sowie dem Hauptluftstrom einstufig eingestellt werden. Vorteilhaft wird in einer derartigen Verfahrensführung einerseits lediglich ein strömungstechnisch optimierter Brennraum für den Hauptbrenner und für den Vorbrenner benötigt und andererseits stellt die Verfahrensführung mit einer einstufigen Verbrennung sicher, dass der Mischzone der Hauptdüsenkammer kein Abgas mit unvollständig verbrannten Edukten oder ein Abgas mit einem unerwünscht hohen Anteil an Restsauerstoff zugeführt wird. Vorzugsweise wird dem Hauptdüsenraum bzw. dem Hauptbrennstoffstrom ein Abgas ohne Restsauerstoff zugeführt.

"Einstufig" bedeutet in diesem Zusammenhang, dass die gesamte zum Einstellen des jeweiligen stöchiometrischen Verhältnisses verwendete Luft in einem einzigen Mischungsvorgang dem jeweiligen Brennstoffstrom zugemischt wird. Folglich findet weder eine mehrstufige Verbrennung mit zeitlich aufeinanderfolgenden und diskontinuierlichen Mischungsvorgängen noch eine Abmagerung des entstehenden Abgases durch weitere Zumischung von Luft statt.

In diesem Zusammenhang sei herausgestellt, dass vorliegend mit inertem bzw. weitgehend inertem Heißgas nicht zwingend ein Inertgas, wie beispielsweise Helium, verstanden wird, sondern auch Heißgase hiervon umfasst sind, die nicht unmittelbare an der Verbrennung teilnehmen, jedoch ggf. in Nachreaktionen. So sind insbesondere Verbrennungsabgase als inerte Heißgase in diesem Sinne zu verstehen, auch wenn diese bei der Verbrennung nachlaufenden Reaktionen noch mit nachreagieren.

Auch wird alternativ bzw. kumulativ zu den vorstehend erläuterten Verfahren für ein verbessertes Betriebs- und Regelverhalten auch unter instationären Betriebsbedingungen ein Verfahren zum Betrieb eines Axialkolbenmotors mit wenigstens einer Verdichterstufe, mit wenigstens einem Hauptbrenner und mit wenigstens einem Vorbrenner vorgeschlagen, wobei die Verdichterstufe dem Hauptbrenner einen Hauptluftstrom sowie dem Vorbrenner einen Vorluftstrom zuführt, wobei einem Hauptbrennstoffstrom des Hauptbrenners ein Abgasstrom aus dem Vorbrenner zugemischt wird und wobei sich das Verfahren dadurch auszeichnet, dass der Hauptbrennstoffstrom und der Hauptluftstrom stromaufwärts eines Hauptbrennraum gemischt werden. Dies hat zur Folge, dass der in dem Hauptbrennstoffstrom befindliche Brennstoff und der Luftsauerstoff des Hauptluftstromes während des Durchlaufens einer Mischstrecke homogen in dem entstehenden Gemisch verteilen und in einer unmittelbar anschließenden Brennzone bzw. in der sich unmittelbar anschließenden Brennkammer eine besonders schadstoffarme und zugleich effiziente Verbrennung eingeleitet werden kann.

Wie sofort ersichtlich können in einer Verfahrensführung mit einer Mischstrecke Vorreaktionen im Gemisch ebenfalls homogen verteilt auftreten, wodurch die nachfolgende Verbrennung keine hohen Temperaturgradienten und somit keine wesentlichen Konzentrationszonen für eine erhöhte Schadstoffbildung aufweist. Es versteht sich, dass mit "Temperaturgradienten" im Sinne des vorstehend erläuterten Verfahrens zur Mischung des Hauptbrennstoffstromes mit dem Hauptluftstrom diejenigen Temperaturschwankungen gemeint sind, welche sich senkrecht zur Strömungsrichtung, also entlang der Flammenfront, ausbilden. Eine gleichmäßig ausgebildete Flammenfront ist letztlich die vorteilhafte Folge einer homogenen Durchmischung in der Mischstrecke.

Eine weitere vorteilhafte Verfahrensführung ergibt sich, wenn der Hauptbrennstoffstrom und der Hauptluftstrom in einem Hauptmischrohr gemischt werden. Die Verwendung eines Hauptmischrohres für das vorstehend erläuterte Verfahren begünstigt vorteilhaft die geometrische Definition der sich ausbildenden Mischstrecke. Somit kann auf die Mischung des Hauptbrennstoffstromes und des Hauptluftstromes konkret Einfluss genommen werden, indem die Mischstrecke durch Wandungen des Hauptmischrohres vorgegeben wird.

Besonders vorteilhaft für das Verfahren zum Mischen des Hauptbrennstoffstromes und des Hauptluftstromes ist es, wenn der Abgasstrom des Vorbrenners dem Hauptbrennstoffstrom vor dem Mischen des Hauptbrennstoffstromes mit dem Hauptluftstrom zugemischt wird. Es ist sofort ersichtlich, dass in einer Strömung mit mehreren gasförmigen Komponenten eine stufenweise Vermischung zu deutlich besseren Ergebnisse in den einzelnen Mischstufen führt. Die vorherige vollständige Durchmischung des Hauptbrennstoffstromes mit dem Abgasstrom des Vorbrenners hat somit sehr vorteilhafte Auswirkungen auf die anschließende Beimischung des Hauptluftstromes. Insbesondere werden die in dem Hauptbrennstoffstrom eingeleiteten Reaktionen durch eine stufenweise Vermischung besonders gut kontrolliert, indem gezielt auf Reaktionszeiten Einfluss genommen werden kann, wenn die Zumischung von Sauerstoff zeitlich versetzt, wie vorstehend erläutert, erfolgt.

Für eine Verbesserung der Reaktionsverhaltens des eingesetzten Brennstoffes kann es weiterhin vorteilhaft für ein Verfahren zum Mischen des Hauptbrennstoffstromes mit dem Hauptluftstrom sein, wenn der Hauptbrennstoffstrom eine Mischdüse durchströmt, bevor der Hauptbrennstoffstrom mit dem Hauptluftstrom an einer Ringdüse gemischt werden. Auch diese Ausgestaltung des Verfahrens führt, wie vorstehend erläutert, zu einem besseren Verbrennungsablauf, indem auf Vorreaktionen des Brennstoffes gezielt Einfluss genommen werden kann. Die Verwendung einer vorteilhaft ausgestalteten Mischdüse bietet neben der Möglichkeit auf Reaktionszeiten einzuwirken zudem die Möglichkeit den geometrischen Strömungsverlauf und somit das räumliche Mischverhalten des Hauptbrennstoffstromes mit dem Abgasstrom zu gestalten. So kann, wenn dies erforderlich erscheint, an einer Mischdüse der Strömung ein Drall auferlegt werden oder aber, falls ein Drall bereits vorhanden ist, eine im Wesentlichen drallfreie Anströmung der Hauptbrennkammer gesichert werden.

Alternativ bzw. kumulativ zu den voranstehenden Lösungen wird darüber hinaus, um ein verbessertes Betriebs- und Regelverhalten auch unter instationären Betriebsbedingungen bereitzustellen, ein Axialkolbenmotor mit wenigstens einem Hauptbrenner, der wenigstens einen Hauptbrennraum sowie wenigstens einen Hauptdüsenraum aufweist, und mit wenigstens einem Vorbrenner, der wenigstens einen Vorbrennraum sowie wenigstens einen Vordüsenraum aufweist, vorgeschlagen, wobei über wenigstens eine Heißgaszuführung der Vorbrennraum an dem Hauptdüsenraum angeschlossen ist und wobei sich der Axialkolbenmotor durch einen Leerlauf und wenigstens eine Teillast sowie durch eine Hauptdüse des Hauptbrenners und eine Vordüse des Vorbrenners, die mittels einer Steuereinheit miteinander gekoppelt sind, auszeichnet.

Eine Kopplung der Hauptdüse und der Vordüse kann somit vorteilhaft für die Gesamtregelung des Axialkolbenmotors herangezogen werden, wenn durch veränderte Betriebsbedingungen die unterschiedlichen Brennstoffströme und Luftströme des Hauptbrenners sowie des Vorbrenners diesen unterschiedlichen Betriebsbedingungen entsprechend angepasst werden müssen.

Alternativ bzw. kumulativ hierzu stellt auch ein Verfahren zum Betrieb eines Axialkolbenmotors mit wenigstens einem Hauptbrenner und mit wenigstens einem Vorbrenner, wobei einem Hauptbrennstoffstrom des Hauptbrenners ein Abgasstrom des Vorbrenners zugemischt wird, ein verbessertes Betriebs- und Regelverhalten auch unter instationären Betriebsbedingungen bereit, wenn sich das Verfahren dadurch auszeichnet, dass der Hauptbrenner während eines Lastsprunges von einem Leerlauf zu einer niedrigsten Teillast unter Einsetzen des Hauptbrennstoffstromes gezündet und ein Vorbrennstoffstrom des Vorbrenners während des Lastsprunges um wenigsten den halben Betrag des Hauptbrennstoffstromes, bevorzugter um den Betrag des Hauptbrennstoffstromes, verringert wird.

Die Kopplung der Hauptdüse mit der Vordüse über eine Steuereinheit bzw. die Verringerung des Vorbrennstoffstromes bei Zündung des Hauptbrenners trägt unabhängig von den übrigen Merkmalen vorliegender Erfindung vorteilhaft zur Stabilität des Brennverhaltens des Gesamtbrenners insofern bei, indem der Lastsprung von einem Leerlauf zu einer niedrigsten Teillast möglichst gleichmäßig und ohne eine größere Differenz des Ausgangsdrehmomentes des Axialkolbenmotors stattfindet. So können für einen dem Axialkolbenmotor nachgeschalteten Antriebsstrang und für den Fahrkomfort in einem Kraftfahrzeug mit Axialkolbenmotor schädliche Laststöße vermindert werden.

Im Leerlauf liefert hierbei bevorzugt bereits der Vorbrenner eine ausreichende Brennerleistung, um den Axialkolbenmotor stabil in diesem Leerlauf zu betreiben. Wird eine höhere Last angefordert und somit der Hauptbrenner eingeschaltet, wird ein besonders gleichmäßiger und stetiger Leistungsanstieg des gesamten Brenners erreicht indem der Gesamtbrennstoffstrom zunächst dadurch konstant gehalten wird, dass der Vorbrennstoffstrom vorzugsweise um etwa den Betrag des Hauptbrennstoffstromes, wie obenstehend erläutert, verringert wird. Wie sich in praktischen Versuchen herausgestellt hat, ist aber auch schon die Verminderung des Vorbrennstoffstromes um die Hälfte des einsetzenden Hauptbrennstoffstromes ausreichend für einen gleichmäßigen Lastsprung des Axialkolbenmotors. Wie sofort ersichtlich, kann aber auch jedes andere Verhältnis bzw. jede andere Kopplung zwischen der Vordüse und der Hauptdüse und somit auch zwischen dem Vorbrennstoffstrom und dem Hauptbrennstoffstrom eingestellt werden.

Alternativ bzw. kumulativ zu den vorstehenden Ausgestaltungen der Erfindung wird, um ein verbessertes Betriebs- und Regelverhalten auch unter instationären Betriebsbedingungen bereitzustellen, ein Axialkolbenmotor mit wenigstens einer Verdichterstufe, mit wenigstens einem Hauptbrenner, der wenigstens einen Hauptbrennraum sowie wenigstens einen Hauptdüsenraum mit einem Hauptbrennstoffstrom aufweist, mit wenigstens einem Vorbrenner, der wenigstens einen Vorbrennraum sowie wenigstens einen Vordüsenraum mit einem Vorbrennstoffstrom aufweist, und mit wenigstens einer Hauptluftleitung zwischen der Verdichterstufe und einem Hauptmischrohr des Hauptbrenners sowie wenigstens einer Vorluftleitung zwischen der Verdichterstufe und einem Vormischrohr des Vorbrenners vorgeschlagen, wobei über wenigstens eine Heißgaszuführung der Vorbrennraum an dem Hauptdüsenraum angeschlossen ist und sich der Axialkolbenmotor durch wenigstens eine Sekundärluftleitung zwischen der Verdichterstufe und dem Hauptbrenner, die an den Hauptbrennraum und/oder stromabwärts des Hauptbrennraumes an den Hauptbrenner angeschlossen ist, auszeichnet.

Dementsprechend wird alternativ bzw. kumulativ zu den vorstehend erläuterten Verfahren, um ein verbessertes Betriebs- und Regelverhalten auch unter instationären Betriebsbedingungen bereitzustellen, ein Verfahren zum Betrieb eines Axialkolbenmotors mit wenigstens einem Hauptbrenner, mit wenigstens einem Vorbrenner und mit einem Luftstrom vorgeschlagen, wobei der Hauptbrenner wenigstens einen Hauptbrennraum sowie wenigstens einen Hauptdüsenraum mit einem Hauptbrennstoffstrom aufweist, wobei der Vorbrenner wenigstens einen Vorbrennraum sowie wenigstens einen Vordüsenraum mit einem Vorbrennstoffstrom aufweist, wobei über eine Heißgaszuführung der Vorbrennraum an dem Hauptdüsenraum angeschlossen ist, wobei der Luftstrom einen Hauptluftstrom für den Hauptbrenner sowie einen Vorluftstrom für den Vorbrenner aufweist und wobei sich das Verfahren dadurch auszeichnet, dass während eines Leerlaufs und/oder einer Teillast des Axialkolbenmotors, wenigstens jedoch bei einem Lastsprung vom Leerlauf zu einer niedrigsten Teillast, dem Luftstrom wenigstens ein Sekundärluftstrom entnommen wird und der Sekundärluftstrom stromabwärts und/oder innerhalb des Hauptbrennraumes einem Abgasstrom zugeführt wird.

Mittels dieser vorstehend erläuterten Sekundärluftleitung bzw. des Sekundärluftstromes können wiederum vorteilhaft das Betriebsverhalten des Axialkolbenmotors im Leerlauf, unter Teillast und insbesondere auch bei einem Lastsprung von Leerlauf zu Teillast besonders gleichmäßig und stabil, also unter Begrenzung des einsetzenden Lastsprunges, betrieben werden.

Eine Sekundärluftleitung, wobei diese Sekundärluftleitung sowie die Hauptluftleitung und die Vorluftleitung vorteilhaft parallele Teilluftleitungen einer gemeinsamen an die Verdichterstufe angeschlossenen Gesamtluftleitung sein können, wodurch die Steuerung des Motors auch unabhängig von den übrigen Merkmalen vorliegender Erfindung vereinfachen lässt, verringert folglich vorteilhaft die dem Hauptbrenner zugeführte Verbrennungsluft, so dass aufgrund der einzuhaltenden Magergrenzen der Brennstoffstrom im Hauptbrenner ebenfalls verringert werden kann.

Eine Verringerung des Hauptbrennstoffstromes ohne eine Verringerung des Hauptluftstromes würde bei Unterschreiten der Magergrenzen, wie sofort ersichtlich, zum Erlöschen der Flamme im Hauptbrenner führen. Somit kann unter Einhaltung eines konstanten Brennstoff-Luft-Verhältnisses die Leistung des Brenners niedriger eingestellt werden, als dies ohne Sekundärluftleitung der Fall wäre. Die Sekundärluft, welche sodann hinter einer Verbrennungszone des Hauptmischrohres im Brennraum wieder dem übrigen Luft- und Abgasstrom zugemischt wird, führt an dieser Stelle zu einer weiteren Abmagerung des Abgases, wobei der Brenner, insbesondere der Hauptbrenner, dennoch aus vorstehend erläuterten Gründen mit einer stabilen Verbrennung und schadstoffarmen betrieben werden kann.

In diesem Zusammenhang bezeichnet "Magergrenze" dasjenige Brennstoff-LuftVerhältnis, bei welchem ein Betrieb des Brenners bzw. des Hauptbrenners mit einer stabilen Flamme gerade noch ohne ein Erlöschen der Flamme möglich ist.

Mit "Leerlauf" wird jener Betriebspunkt des Axialkolbenmotors bezeichnet, bei welchem keine bzw. eine sehr geringe Leistung an einer Abtriebswelle des Axialkolbenmotors abgegeben wird und der Axialkolbenmotor in einer niedrigsten stabilen Drehzahl betrieben werden kann. "Teillast" bezeichnet im Gegensatz hierzu jeden anderen Betriebspunkt zwischen dem Leerlauf und einer Volllast, wobei die "Volllast" jeweils das maximal abgegebene Drehmoment bei einer beliebigen Drehzahl bezeichnet. Die "Volllast" bezeichnet demnach ausdrücklich nicht den Punkt der maximalen Leistungsabgabe. Entsprechend ist eine "niedrigste Teillast" der Punkt im Kennfeld des Axialkolbenmotors, bei welchem der Axialkolbenmotor unter Betrieb des Hauptbrenners und bei Leerlaufdrehzahl eine kleinste mögliche positive Leistung, die über der Leerlaufleistung liegt, abgibt. Wie bereits zuvor erläutert, ist es denkbar, dass bei Leerlauf der Axialkolbenmotor lediglich mit dem Vorbrenner betrieben wird.

Für einen Axialkolbenmotor nach den vorstehend erläuterten Ausgestaltungen ist es weiterhin vorteilhaft, wenn der Vordüsenraum über die Hilfsheißgaszuführung an den Vorbrennraum angeschlossen ist. Hierdurch bietet sich die Möglichkeit, die Aufbereitung des in den Vordüsenraum eingespritzten Brennstoffes mittels des aus dem Vorbrennraum entnommenen Abgases einfach und betriebssicher zu ermöglichen. Insofern wird über den Rückfluss von Abgas aus dem Vorbrennraum in den Vordüsenraum eine interne Abgasrückführung innerhalb des Vorbrenners realisiert.

Im Übrigen ist es weiterhin für einen Axialkolbenmotor mit wenigstens einem Hauptbrenner und mit wenigstens einem Vorbrenner, der wenigstens einen Vorbrennraum sowie wenigstens einen Vordüsenraum aufweist, auch unabhängig von den übrigen Merkmalen vorliegender Erfindung vorteilhaft, wenn der Vordüsenraum über eine Hilfsheißgaszuführung an einen Hilfsbrenner angeschlossen ist. Somit besteht eine weitere Möglichkeit Abgas bzw. heißes Inertgas dem Vordüsenraum zuzuführen, ohne einen Abgasstrom aus dem Vorbrennraum zu entnehmen. In diesem Zusammenhang ist es auch denkbar, jegliches andere inerte Gas weitegehend inerte Gas als Heißgas dem Vordüsenraum zuzuführen. Dies können beispielsweise beheizter Stickstoff, Kohlenstoffdioxid, beheizte Edelgase oder aber auch Wasserdampf sein, wobei insbesondere Wasserdampf während der Verbrennung zu einer Schadstoffreduktion oder zu einer Stabilisierung der Verbrennung herangezogen werden kann.

Es sei darauf hingewiesen, dass der Begriff "inert" im Zusammenhang mit Verbrennungsluft bzw. mit verbrannter Luft insbesondere ein Gasgemisch beschreibt, welches einen Anteil an reaktivem Sauerstoff von annähernd 0 aufweist und somit einerseits keine Reaktion mit weiterem zugemischtem Brennstoff stattfinden kann und andererseits wegen des Sauerstoffmangels keine Schadstoffproduktion, wie etwa die Bildung von Stickoxiden, einsetzen kann, wobei Stickoxid wegen seiner Trägheit bereits als inertes Gas aufgefasst wird. Der Begriff "Inertgas" wird somit nicht ausschließlich für Edelgase und Stickstoff sondern auch für Abgas mit einem Sauerstoffgehalt von annähernd 0 verwendet.

Auch kann ein Axialkolbenmotor derart ausgestaltet sein, dass der Hauptbrennstoffstrom vor Eintritt in den Hauptbrennraum gasförmig ist und/oder eine Temperatur oberhalb einer höchsten Siedetemperatur eines Brennstoffsiedeverlaufes aufweist. Ferner ist es für einen Axialkolbenmotor ebenfalls möglich und vorteilhaft, wenn der Vorbrennstoffstrom vor Eintritt in den Vorbrennraum gasförmig ist und/oder eine Temperatur oberhalb einer höchsten Siedetemperatur eines Brennstoffsiedeverlaufes aufweist. Insofern bietet eine derartige Ausgestaltung eines Axialkolbenmotors den Vorteil, dass die zur Gemischbildung notwendige Verdampfungsenthalpie nicht durch eine Reaktionswärme während der Verbrennung sondern bereits vor der Zumessung Brennstoffes zur Verbrennungsluft bereitgestellt wird. Hierdurch bietet sich insbesondere die Möglichkeit, eine rußfreie Verbrennung zu ermöglichen, da die Verbrennungstemperatur bei bereits gasförmig vorliegenden Brennstoff weitaus höher ist als dies bei flüssigem Brennstoff der Fall wäre.

Für einen flüssigen Brennstoff ist es in vorstehendem Zusammenhang auch vorteilhaft, wenn dieser annähernd die höchste Temperatur seines Brennstoffsiedeverlaufes aufweist, wodurch wenigstens leichtflüchtige Bestandteile des Brennstoffes bereits im gasförmigen Aggregatzustand vorliegen. Mit "Siedeverlauf" ist hierbei der Teil der Siedekurve eines Brennstoffes gemeint, welcher einen Rückstand oder Verlust während des Siedens nicht berücksichtigt. Somit bezeichnet der Begriff "Siedeverlauf" den stetigen Kurvenabschnitt einer Siedekurve. Ferner bezeichnet "flüssiger Brennstoff" jeglichen Brennstoff, welcher bei Zimmertemperatur und Umgebungsdruck, also bei 20°C und 1bar absolut, in flüssiger Form vorliegt.

Ggf. kann hierdurch bereits eine chemische oder physikalische Zerlegung des Brennstoffs bedingt werden, welche den Schadstoffausstoss des Motors weiter verringert.

In dem vorstehenden Zusammenhang zum Aggregatszustand des Brennstoffes ist es weiterhin vorteilhaft für ein Verfahren zum Betrieb eines Axialkolbenmotors, wenn dem Hauptbrennstoffstrom während des Zumischens des Abgasstromes Verdampfungswärme aus dem Abgasstrom zugeführt wird und der Hauptbrennstoffstrom in einen gasförmigen Aggregatzustand übergeht. Auch ist es ebenso vorteilhaft, wenn dem Vorbrennstoffstrom während des Zumischens des Abgasstromes Verdampfungswärme aus dem Abgasstrom zugeführt wird und der Vorbrennstoffstrom in einen gasförmigen Aggregatzustand übergeht. Diese Verfahren setzen voraus bzw. fordern vor dem Zumischen eine derart hohe Temperatur des Abgases, dass diese während des Zumischens mindestens zum Verdampfen des Brennstoffes ausreicht. Wie bereits obenstehend erläutert, wird die während des Verbrennens eines Brennstoff-Luft-Gemisches im Mischrohr eines Brenners, beispielsweise im Vormischrohr des Vorbrenners oder im Hauptmischrohr des Hauptbrenners, freigesetzte Wärme aus der Verbrennung durch dieses Verfahren nicht mehr für die Verdampfung des Brennstoffes aufgewendet und folglich auch weniger Ruß in der Verbrennung gebildet, da die eigentliche Verbrennung auf einem höheren Temperaturniveau erfolgen kann.

Darüber hinaus muss im Zusammenhang mit der thermischen Aufbereitung des Brennstoffes nicht ausschließlich ein flüssiger Brennstoff für einen Axialkolbenmotor verwendet werden. Es ist ferner ebenso vorteilhaft, einen gasförmigen Brennstoff für einen Axialkolbenmotor, insbesondere nach den vorstehend erläuterten Ausgestaltungen, zu verwenden, da dieser ebenfalls, auch wenn keine Verdampfungsenthalpie aufgebracht werden muss, durch eine thermische Aufbereitung mittels Vorreaktionen auf molekularer Ebene zerlegt werden und somit wiederum eine sehr schadstoffarme Verbrennung erfolgen kann.

Unabhängig vom Aggregatszustand des Kraftstoffes, ob gasförmig oder flüssig, ist es weiterhin vorteilhaft für ein Verfahren zum Betrieb eines Axialkolbenmotors, wenn einerseits dem Hauptbrennstoffstrom während des Zumischens des Abgasstromes Wärme aus dem Abgasstrom übertragen wird und wenigstens ein Bestandteil des Hauptbrennstoffstromes zumindest zum Teil thermisch dissoziiert, und/oder andererseits dem Vorbrennstoffstrom während des Zumischens des Abgasstroms Wärme aus dem Abgasstrom übertragen wird und wenigstens ein Bestandteil des Vorbrennstoffstroms zumindest zum Teil thermisch dissoziiert. Eine derartige Verfahrensführung in einem Axialkolbenmotor bietet somit nicht nur die Möglichkeit, Rußbildung zu verringern, wenn das Temperaturniveau durch die Bereitstellung einer Verdampfungswärme angehoben wird, sondern auch wenn bereits vor der Gemischbildung der Brennstoff derart aufbereitet wird, dass bereits Vorreaktionen in diesem Brennstoff entstehen. Somit bietet sich eine Möglichkeit, weitere Schadstoffe, wie etwa Stickoxide, zu verhindern bzw. zu minimieren, da durch die eingeleiteten Vorreaktionen die insgesamt zur Verbrennung benötigte Reaktionszeit des Brennstoffes mit der Luft drastisch verkürzt werden kann sowie die Bildung von Stickoxiden unterdrückt wird. Thermisch gebildetem Stickoxid, welches beispielsweise nach dem "Zeldovich-Mechanismus" gebildet wird, bleibt durch die voranstehende Ausgestaltung, wie sofort ersichtlich, keine ausreichend lange Verweilzeit, um in ausreichender Menge gebildet zu werden.

Einem Verfahren zum Betrieb des Axialkolbenmotors ist es aus den bereits weiter vorstehend genannten Gründen weiterhin zuträglich, wenn der dem Vorbrennstoffstrom zugeführte Abgasstrom dem Vorbrennraum entnommen wird und/oder der dem Vorbrennstoffstrom zugeführte Abgasstrom einem Hilfsbrenner entnommen wird. In diesem Zusammenhang ist es darüber hinaus vorteilhaft für ein Verfahren zum Betrieb eines Axialkolbenmotors, wenn der dem Hauptbrennstoffstrom zugeführte Abgasstrom dem Vorbrennraum entnommen wird. Auch der Vorteil dieser Ausgestaltung wurde bereits vorstehend erläutert, wobei die Zumessung von heißem Abgas oder jeglichem heißen Inertgas zum Brennstoffstrom eine vorteilhafte Aufbereitung des Brennstoffes für eine möglichst schadstoffarme, stabile und schnelle Verbrennung ermöglicht.

Um vorteilhaft eine Aufbereitung des Brennstoffes in dem Vorbrenner bzw. in dem Hauptbrenner anderweitig zu realisieren, ist es für ein Verfahren weiterhin vorteilhaft, wenn die Zumischung des Abgasstromes in den Vorbrennstoffstrom vor einer Zumischung des Vorbrennstoffstromes in den Vorluftstrom erfolgt und/oder wenn die Zumischung des Abgasstromes in den Hauptbrennstoffstrom vor einer Zumischung des Hauptbrennstoffstromes in einen Hauptluftstrom erfolgt. Diese Ausgestaltungen ermöglichen ebenfalls die zuvor erläuterte thermische Aufbereitung des Brennstoffes, so dass der Brennstoff während der Zumischung im jeweiligen Mischrohr bereits entweder gasförmig vorliegen oder aber auch Verbrennungszwischenprodukte aufweisen kann.

Es versteht sich, dass die vorstehend erläuterten Merkmale auch unabhängig von allen weiteren Merkmalen vorliegender Erfindung vorteilhaft für einen Axialkolbenmotor sind.

Um alternativ bzw. kumulativ zu den übrigen Merkmalen der Erfindung ein verbesserten Betriebs- und Regelverhalten auch unter instationären Betriebsbedingungen bereitzustellen, wird ein Axialkolbenmotor mit wenigstens einem Hauptbrenner der wenigstens einen Hauptbrennraum sowie wenigstens einen Hauptdüsenraum aufweist, und mit wenigstens einem Vorbrenner, der wenigstens einen Vorbrennraum sowie wenigstens ein Vordüsenraum aufweist vorgeschlagen, wobei über wenigstens eine Heißgaszuführung der Vorbrennraum an dem Hauptdüsenraum angeschlossen ist, wobei ein Hauptbrennstoffstrom des Hauptbrenners mittels einer Hauptdüse in den Hauptdüsenraum eingeleitet wird und wobei sich der Axialkolbenmotor dadurch auszeichnet, dass der Hauptbrennstoffstrom stromaufwärts der Hauptdüse ein Heizmittel aufweist.

Die aufgabengemäße bessere Regelbarkeit und das aufgabengemäße stabile Laufverhalten des Axialkolbenmotors durch die vorstehend genannten Heizmittel kann dadurch gewährleistet werden, dass die Gemischaufbereitung durch eine über diese Heizmittel zugeführte Wärmemenge verbessert und unterstützt wird. Insbesondere kann kurz nach einem Startvorgang ein möglicherweise bestehendes Temperaturdefizit, welches durch die kalten Brennraumwände entstehen könnte, über die Heizmittel ausgeglichen werden. Auch kurzzeitige hohe Lastanforderungen an den Brenner können, sofern das Brennverhalten des Brenners diesen Lastanforderungen nicht genügt, mittels der zusätzlichen Heizmittel betriebssicher bereitgestellt werden.

In einer vorteilhaften Ausgestaltung kann das zum Beheizen des Hauptbrennstoffstroms eingesetzte Heizmittel ein elektrisches Heizmittel sein. Insbesondere kann das Heizmittel eine Glühkerze sein. Die Verwendung eines elektrischen Heizmittels bzw. einer Glühkerze als Heizmittel bewirkt eine Unabhängigkeit des zum Heizen zur Verfügung gestellten Wärmestroms von dem jeweiligen Last- und Betriebszustandes des Axialkolbenmotors. So kann, wie bereits vorstehend erläutert, dass elektrische Heizmittel bzw. die Glühkerze bevorzugt bei bzw. nach einem Kaltstart des Axialkolbenmotors zum Aufheizen des Hauptbrennstoffstroms eingesetzt werden.

Ein entsprechendes Heizmittel kann auch für den Vorbrennstoffstrom oder aber für jeglichen anderweitigen Brennstoff- bzw. Kraftstoffstrom eingesetzt werden.

So kann eine weitere Ausgestaltung eines Heizmittels auch darin bestehen, dass zum Heizen eines Brennstoff- bzw. Kraftstoffstromes ein Wärmeübertrager eingesetzt wird und dieser Wärmeübertrager in einem Abgasstrom des Axialkolbenmotors angeordnet ist. Bevorzugt kann hierbei der Wärmeübertrager unmittelbar hinter der Expanderstufe des Axialkolbenmotors eingesetzt werden, wo das Abgas ein besonders hohes Temperaturniveau aufweist.

Es versteht sich ferner, dass die Begriffe "Brennstoff" und "Kraftstoff" synonym verwendet werden, und dass ein Brennstoff oder Kraftstoff jegliche flüssigen aber auch gasförmigen Kohlenwasserstoffe oder Kohlenwasserstoffgemische aber auch andere Energie haltige Stoffe beinhalten kann, die mit Luft exotherm reagieren. Auch versteht es sich, dass als Reaktionspartner nicht zwingend Luft sondern auch ein anderes zu dem Brennstoff kompatibles Medium genutzt werden kann.

Die Verwendung eines Heizmittels ist darüber hinaus weiterhin von Vorteil, wenn das Heizmittel, insbesondere wenn es sich um ein elektrisches Heizmittel handelt, in unmittelbarer Nähe zu der Hauptdüse oder zu einer anderweitigen Kraftstoffdüse angeordnet ist. Somit wird durch einen besonders kurzen Strömungsweg von dem Heizmittel zur Hauptdüse oder zu einer alternativen Brennstoffdüse ein Wärmeverlust vermindert und folglich ein minimaler Energieaufwand benötigt, um den jeweiligen Brennstoffstrom auf die gewünschte Temperatur aufzuheizen. Diese gewünschte Temperatur des Brennstoffes ergibt sich folglich aus der Temperatur, welche der Brennstoff bei Eintritt in den vorgesehenen Brenn- oder Mischraum, beispielsweise in den Hauptdüsenraum, aufweisen soll und nicht aus jener Temperatur, auf welche der Brennstoff unmittelbar an dem Heizmittel aufgeheizt wird.

Die vorstehend erläuterten Merkmale zur Brennstoff- bzw. Kraftstoffheizung können auch unabhängig von den übrigen Merkmalen vorliegender Erfindung vorteilhaft für einen Axialkolbenmotor sein.

Zu den voranstehenden Merkmalen der Erfindung wird, um ein verbessertes Betriebs- und Regelverhalten auch unter instationären Betriebsbedingungen bereitzustellen, alternativ bzw. kumulativ ein Axialkolbenmotor vorgeschlagen, der wenigstens einen Hauptbrenner, der wenigstens ein Hauptbrennraum sowie wenigstens einen Hauptdüsenraum aufweist, und wenigstens einen Vorbrenner, der wenigstens einen Vorbrennraum sowie wenigstens eine Vordüsenraum aufweist, umfasst, wobei der Vorbrennraum an dem Hauptdüsenraum über wenigstens eine Heißgaszuführung angeschlossen ist, wobei der Vorbrenner eine Vorbrennerachse, die Heißgaszuführung eine Zuführungsachse sowie der Hauptbrenner eine Hauptbrennerachse aufweisen und wobei sich der Axialkolbenmotor dadurch auszeichnet, dass die Vorbrennerachse und/oder die Zuführungsachse mit der Hauptbrennerachse zumindest in einer Projektionsebene, die sowohl parallel zur Hauptbrennerachse als auch zu der Vorbrennerachse und/oder zu der Zuführungsachse parallel ausgerichtet ist, einen Winkel zwischen 75° und 105°, bevorzugter einen Winkel zwischen 85° und 95° am bevorzugtesten einen Winkel von 90°, einschließen.

In vorliegendem Zusammenhang bezeichnen die Bezeichnungen "Vorbrennerachse", "Hauptbrennerachse" und "Zuführungsachse" jeweils Achsen, welche durch die Hauptströmungsrichtung in den jeweiligen Baugruppen definiert sind und in der Regel den Grundgeometrien dieser Baugruppen entsprechen. Vorbrennerachse und Hauptbrennerachse entsprechen in der Regel den Hauptsymmterieachsen der Vorbrennkammer bzw. der Hauptbrennkammer, während die Zuführungsachse in der Regel der Achse eines Kanals entspricht, über welchen das Heißgas dem Hauptbrenner zugeführt wird. Ggf., nämlich für den Extremfall, dass der Heißgaszuführung keine Hauptrichtung zugeordnet werden kann, weil diese über mehrere Kanäle oder gar eine Ringdüse erfolgt, kann die Bezeichnung "Zuführungsachse" in vorliegendem Zusammenhang auch eine Ebene umfassen, welche die Hauptströmungsrichtung bis zum Eintritt in den Hauptbrenner bzw. in den Hauptdüsenraum beschreibt. Durch eine Projektion in dieser Ebene ergibt sich dann wiederrum eine Achse, anhand welcher die vorstehend dargestellt Winkelbestimmung erfolgen kann.

Die nahezu rechtwinklige Anordnung der vorstehend beschriebenen Achsen bedingt einen hohen Grad an Durchmischung, da der Hauptbrennstoffstrom das Heißgas mitnehmen muss. Hierdurch kann das Heißgas seine Wirkung besonders gut entfalten, was insbesondere dann gilt, wenn der Hauptbrennstoffstrom im Wesentlichen geradlinig bzw. koaxial zu der Hauptbrennkammer geführt wird.

Unabhängig zu der Anordnung der voranstehend beschriebenen Achsen zur Bereitstellung eines verbesserten Betriebs- und Regelverhalten auch unter instationären Betriebsbedingungen wird alternativ bzw. kumulativ, auch zu den übrigen Merkmalen der Erfindung, ein Axialkolbenmotor mit wenigstens einem Hauptbrenner, der wenigstens einen Hauptbrennraum sowie wenigstens einen Hauptdüsenraum aufweist, und mit wenigstens einem Vorbrenner, der wenigstens einen Vorbrennraum sowie wenigstens einen Vordüsenraum aufweist, vorgeschlagen, wobei über wenigstens eine Heißgaszuführung der Vorbrennraum an dem Vordüsenraum angeschlossen ist und wobei sich der Axialkolbenmotor dadurch auszeichnet, dass vorbrennerseitig des Hauptdüsenraums ein Ringraum vorgesehen ist. In diesem Zusammenhang sei betont, dass ein Ringraum sich durch zwei konzentrisch angeordnete Wandbereiche, eine innere Wandung und eine äußere Wandung, auszeichnet, durch welche eine sehr gleichförmige Bewegung des den Ringraum durchströmenden Gases erzwungen werden kann. Dieses bedingt, unabhängig von den übrigen Merkmalen vorliegender Erfindung, eine sehr gute Homogenität des Heißgases mit dem Hauptbrennstoffstrom.

Der Ringraum und die Anordnung der Achsen bewirken einzeln und insbesondere aber im Zusammenspiel eine Zwangsführung des in dem Hauptdüsenraum vorliegenden Fluids und vermindert Zonen eines inhomogenen Gemisches, in welchen Rußbildung begünstigt werden kann. Weiterhin wirkt ein besonders homogen gemischtes Fluid, bestehend aus Brennstoff und Abgas bzw. Heißgas, besonders vorteilhaft in dem nachgeschalteten Verbrennungsprozess des Hauptbrenners.

Besonders vorteilhaft wird eine Homogenisierung des im Hauptdüsenraum erzeugten Gemisches beeinflusst, wenn die Vorbrennerachse und/oder die Zuführungsachse den Ringraum tangieren. Durch die zum Ringraum tangentiale Ausgestaltung der vorgenannten Achsen strömt das Heißgas in den Ringraum besonders gleichförmig, sodass folglich unerwünschte tote Gebiete, in denen Gas stillsteht, vermieden werden können. In diesem Zusammenhang ist darauf hinzuweisen, dass die Richtung der Vorbrennerachse und die Richtung der Zuführungsachse auseinanderfallen können, wenn die Heißgaszuführung keinen zylindrischen, konischen oder wenigstens im Wesentlichen eindimensionalen Verlauf aufweist. Insofern kann die Heißgaszuführung auch einen kurvenförmigen oder bogenförmigen Verlauf in ihrer Längsrichtung aufweisen. In einem solchen Falle wird die vorgenannte Zuführungsachse an jenem Punkt definiert, an welchem die Heißgaszuführung unmittelbar in den Hauptdüsenraum bzw. in den Ringraum mündet. Ebenfalls ist es sofort ersichtlich, dass die Vorbrennerachse und die Zuführungsachse zusammenfallen, wenn die Heißgaszuführung entlang dieser Achsen keine wesentliche Ausdehnung, also eine sehr geringe Länge, aufweist.

Die als Tangente zum Ringraum ausgebildete Vorbrennerachse oder Zuführungsachse können vorteilhaft den Ringraum in einem Abstand tangieren, wobei der Abstand dem mittleren Ringradius entspricht. Der "mittlere Ringradius" entspricht im Wesentlichen dem arithmetischen Mittel des größten sowie des kleinsten Radius des Ringraumes zur Achse des Ringraumes bzw. zur Hauptbrennerachse, wenn der Ringraum koaxial zur Hauptbrennerachse angeordnet ist. Sollte die Heißgaszuführung einen kleineren Durchmesser als die Dicke des Ringraumes aufweisen, wobei mit "Dicke" mathematisch die Differenz zwischen dem kleinsten und dem größten Radius des Ringraumes gemeint ist, kann, wie sofort ersichtlich, der Abstand zwischen der Vorbrennerachse bzw. der Zuführungsachse auch größer oder kleiner als der mittlere Ringradius sein. Insofern kann eine auf einer Oberfläche der Heißgaszuführung verlaufende Gerade als Tangente zu einer Außenoberfläche des Ringraumes ausgebildet sein, sodass die Heißgaszuführung zumindest an einem Punkt stetig in eine Oberfläche des Ringraumes übergeht und dort gerade keine Kante bildet, an welcher ein Strömungsabriss erfolgen könnte.

Es versteht sich, dass der Begriff "tangieren" gerade nicht im strengen mathematischen Sinne definiert ist, wobei eine den Ringraum tangierende Achse mathematisch den Ringraum an seinem größten Radius berühren müsste. Wie vorstehend erläutert, ist in Bezug auf den größten Radius des Ringraumes eine tangierende Achse als Sekante zu verstehen, wobei der weiter oben definierte mittlere Radius bzw. der durch den mittleren Radius gebildete Vollkreis mit einer Achse auch im mathematischen Sinne eine Tangentenanordnung bilden kann. Es sei betont, dass auch im Zusammenhang mit dem mittleren Radius eine Achse sowohl Tangente, Sekante als auch Passante sein kann. Insbesondere ist der Begriff "tangieren" als nicht radial und nicht axial aufzufassen.

Der mittlere Ringradius ist vorzugsweise koaxial zu der Hauptbrennerachse angeordnet, so dass das Gemisch aus Heißgas und Kraftstoff besonders homogen ausgebildet werden kann.

Alternativ bzw. kumulativ wird zu den vorstehenden Merkmalen, um ein verbessertes Betriebs- und Regelverhalten auch unter instationären Betriebsbedingungen bereitzustellen, ein Verfahren zum Betrieb eines Axialkolbenmotors mit wenigstens einem Hauptbrenner und mit wenigstens einem Vorbrenner vorgeschlagen, wobei ein Hauptbrennstoffstrom des Hauptbrenners ein Abgasstrom des Vorbrenners zugemischt wird und wobei sich das Verfahren dadurch auszeichnet, dass der Abgasstrom des Vorbrenners tangential von einem Ringraum in den Hauptdüsenraum geführt wird.

Wie bereits vorstehend erläutert wird hierdurch ein besonders impulsarmes Zuströmen des Abgases in den Ringraum bzw. in den Hauptdüsenraum insofern erreicht, dass sich das einströmende Abgas im gesamten Ringraum gleichmäßig ausbreiten und homogen mit den dort befindlichen Brennstoff, dem Hauptbrennstoffstrom, vermischen kann. Eine impulsbehaftete Umlenkung des Abgasstromes beim Einströmen in den Ringraum bzw. in den Hauptdüsenraum kann unter Umständen zu toten Gebieten und Abreißströmungen führen, wobei dort mangels guter Durchmischung Rußbildung auftreten kann.

Wie sofort ersichtlich, ist der Begriff "totes Gebiet" nicht ausschließlich für Strömungen in flüssigen Medien vorbehalten, sondern bezeichnet ebenso Verwirbelungen und Störungen im Strömungsverlauf gasförmiger Medien.

Weiterhin kann das vorstehend erläuterte Verfahren dahingehen verbessert werden, dass der Abgasstrom des Vorbrenners in einem Abstand zu einer Symmetrieachse des Ringraumes in den Hauptdüsenraum geführt wird und der Abstand einen mittleren Ringradius des Ringraumes entspricht. Auch diese weitere Ausgestaltung führt, wie zuvor beschrieben, zu einer gleichmäßigen Einleitung und zu einer guten Durchmischung des Abgases mit dem Hauptbrennstoffstrom, da ein gleichmäßiger Übergang bzw. eine gleichmäßige Strömung von der Heißgaszuführung in den Ringraum ermöglicht wird. Auch ermöglicht es diese Ausgestaltung des Verfahrens einen größtmöglichen Strömungsquerschnitt in der Heißgaszuführung auszugestalten, ohne der Vermischung hinderliche Strömungen in dem Ringraum zu erzeugen, da Oberflächenstörungen, wie beispielsweise aufgrund von Kanten oder Ecken, durch dieses Verfahren minimiert werden können.

Alternativ bzw. kumulativ stellt ein Axialkolbenmotor mit wenigstens einem Hauptbrenner, der wenigstens einen Hauptbrennraum sowie wenigstens einen Hauptdüsenraum aufweist, und mit wenigstens einem Vorbrenner, der wenigstens einen Vorbrennraum sowie wenigstens einen Vordüsenraum aufweist, wobei über wenigstens eine Heißgaszuführung der Vorbrennraum an dem Vordüsenraum angeschlossen ist, ein verbessertes Betriebs- und Regelverhalten auch unter instationären Betriebsbedingungen bereit, wenn sich der Axialkolbenmotor dadurch auszeichnet, dass vorbrennerseitig des Hauptdüsenraums eine Ringdüse zur Heißgaszuführung in den Hauptdüsenraum vorgesehen ist. Auch eine derartige Ringdüse trägt vorteilhaft zu einer Homogenisierung der Vermischung zwischen Heißgas und Kraftstoff bei, so dass letzterer besser aufgeschlossen bzw. aufbereitet werden kann.

Alternativ bzw. kumulativ hierzu stellt weiterhin ein Axialkolbenmotor mit wenigstens einem Hauptbrenner, der wenigstens einen Hauptbrennraum sowie wenigstens einen Hauptdüsenraum aufweist, und mit wenigstens einem Vorbrenner, der wenigstens einen Vorbrennraum sowie wenigstens einen Vordüsenraum aufweist, wobei über wenigstens eine Heißgaszuführung der Vorbrennraum an dem Hauptdüsenraum angeschlossen ist, ein verbessertes Betriebs- und Regelverhalten auch unter instationären Betriebsbedingungen bereit, wenn sich der Axialkolbenmotor dadurch auszeichnet, dass der Hauptbrenner hauptdüsenraumseitig eines Hauptmischrohres eine Ringdüse aufweist. Während die vorstehend genannte Ringdüse für ein schnelles Durchmischen des Heißgases mit dem Brennstoff angewendet wird und somit der Wärme- und Stofftransport vorteilhaft beeinflusst werden, dient die Ringdüse, welche in einer vorteilhaften Ausgestaltung zur Zuführung eines Hauptluftstromes in das Hauptmischrohr vorgesehen ist, für einen schnellen Stofftransport und für eine schnelle Durchmischung eingeleiteter Luft. Hieraus ergibt sich eine schnelle Verbrennung des zuvor aufbereiteten Brennstoffes bei minimaler Schadstoffproduktion, da einerseits sauerstoffarme Verbrennungszonen und somit Ruß vermieden werden und andererseits wenig Reaktionszeit für die Bildung von Stickoxiden verbleibt.

Vorzugsweise ist die Ringdüse koaxial zu derer Hauptbrennerachse und/oder koaxial zu einer Haupteinstrahlrichtung derer Hauptdüse angeordnet, was dementsprechend zu einer äußerst homogenen Flammführung führt.

In einer weiteren vorteilhaften Ausgestaltung des Axialkolbenmotors weist die Ringdüse wenigstens eine konisch ausgebildete Mantelfläche mit einem Kegelwinkel kleiner als 45° auf. Die unter einem spitzen Winkel in das Hauptmischrohr geführte Strömung, beispielsweise diejenige des Hauptluftstromes, führt vorteilhaft zu einer guten Durchmischung der beiden ineinander geführten Gasströme, ohne dass tote Gebiete entstehen. Folglich bietet diese Ausgestaltung der Ringdüse eine weitere Möglichkeit eine Rußbildung zu unterbinden.

Mit "konisch ausgebildeter Mantelfläche" ist eine Oberfläche der Ringdüse gemeint, an welcher das durch die Ringdüse eingedüste Gas entlang strömt. Weiterhin ist hierbei lediglich eine teilweise konisch ausgebildete Fläche gemeint, wobei die Düse im Allgemeinen nicht notwendigerweise einen gesamten Konus beschreiben muss sondern auch einen Kegelstumpf als gasführende Oberfläche aufweist. Der "Kegelwinkel" ist folglich der durch eine auf der Kegeloberfläche verlaufenden Geraden und der Symmetrieachse des Kegels eingeschlossene Winkel. Es versteht sich ferner, dass zwei verschiedene Oberflächen der Ringdüse konisch, jedoch mit unterschiedlichen Kegelwinkeln, ausgebildet sein können.

Alternativ bzw. kumulativ zu den voranstehenden Merkmalen der Erfindung wird, um ein verbessertes Betriebs- und Regelverhalten auch unter instationären Betriebsbedingungen bereitzustellen, ein Axialkolbenmotor mit wenigstens einem Hauptbrenner, der wenigstens einen Hauptbrennraum sowie wenigstens einen Hauptdüsenraum aufweist, und mit wenigstens einem Vorbrenner, der wenigstens einen Vorbrennraum sowie wenigstens einen Vordüsenraum aufweist, vorgeschlagen, wobei über wenigstens eine Heißgaszuführung der Vorbrennraum an dem Hauptdüsenraum angeschlossen ist und wobei sich der Axialkolbenmotor dadurch auszeichnet, dass der Vorbrennraum und/oder der Vordüsenraum eine Isolation an einer Außenwand aufweist. Auch der vorstehend beschriebene Ringraum kann eine entsprechende Isolation aufweisen.

Diese Isolation, welche vorteilhaft auch an einer innenseitigen Außenwand der vorstehend genannten Räume bzw. Brennräume angeordnet sein kann, kann dazu beitragen Wandwärmeverluste und mit diesen Wandwärmeverlusten eintretende thermische Wirkungsgradeinbußen zu minimieren. Es ist sofort ersichtlich, dass durch diese Maßnahme unter Erhöhung des thermischen Wirkungsgrades auch der Gesamtwirkungsgrad des Axialkolbenmotors optimiert werden kann.

Bei Axialkolbenmotoren ist eine Isolation einer Brennraumwand mittels keramischer Schichten, wie beispielsweise in der WO 2009/062473 offenbart, bereits bekannt. Die Verwendung einer Isolation in einem Vorbrennraum und/oder in einem Vordüsenraum bietet allerdings, im Gegensatz zur Verwendung in einem Hauptbrennraum nach dem Stand der Technik, deutliche Vorteile, da in einem Vorbrenner weitestgehend stationäre Bedingungen bei gleichbleibenden Strömungsgeschwindigkeiten eingestellt werden können, sofern die Lastregelung über den Hauptbrenner erfolgt. Somit lässt sich die verwendete Isolation gezielter auf die auftretenden Wärmeströme abstimmen, wodurch eine höhere Sicherheit gegen mechanisches Versagen erreicht werden kann.

Dennoch kann überraschenderweise bei Verwendung einer zweistufigen oder aber auch einer mehrstufigen Ansteuerung eines Vorbrenners, also insbesondere bei Laststeuerung über den Vorbrenner, trotz der instationären Bedingungen eine Isolation Vorteile für einen Axialkolbenmotor bedingen. Hierbei hat sich in praktischen Versuchen herausgestellt, dass die Isolation des Vorbrenner ein ggf. auftretendes instationäres thermisches Verhalten dessen weitestgehend unterdrücken kann und somit eine stabilisierte Flammentemperatur aber auch ein stabilisiertes Emissionsverhalten des Vorbrenners erreicht werden kann. Besondere Bedeutung gewinnen diese an einem Vorbrenner umgesetzten Vorteile, wenn einem nachgeschalteten Hauptbrenner Heißgas mit gleichbleibender Qualität zugeführt werden muss. Einerseits kann infolge des stabilen Betriebes des Vorbrenners der Hauptbrenner ebenfalls in stabileren Bereichen betrieben werden und andererseits gestaltet sich die Regelung des Hauptbrenners weitaus einfacher, da einige auf die Regelung des Hauptbrenners wirkenden Störgrößen, wie etwa durch das instationäre Betriebsverhalten des Vorbrenners bedingt, entfallen. Somit lassen sich schlussendlich vereinfachte Regelkreise verwenden, da auf Kaskadenregelungen oder Regelungen mit komplexen Zustandsräumen verzichtet werden kann.

Besonders vorteilhaft ist es für einen Axialkolbenmotor, wenn die Isolation keramisch ausgebildet ist. Somit wird die Isolation durch eine besonders geringe Wärmeleitfähigkeit begünstigt. Wie weiterhin ersichtlich können auch alternative Werkstoffe als Isolation eingesetzt werden, sofern die Schmelztemperatur des eingesetzten Werkstoffes höher ist als die jeweilige Brennraum- bzw. Düsenraumtemperatur. So bietet beispielsweise ein hochlegierter austenitischer Stahl im Gegensatz zu unlegiertem Stahl eine um zwei Drittel verminderte Wärmeleitfähigkeit. Auch kommen in diesem Zusammenhang weitere alternative Werkstoffe, beispielsweise Titan, in Betracht.

Alternativ bzw. kumulativ zu den voranstehenden Merkmalen der Erfindung wird, um ein verbessertes Betriebs- und Regelverhalten auch unter instationären Betriebsbedingungen bereitzustellen, ein Axialkolbenmotor mit wenigstens einer Kraftstoffdüse und mit wenigstens einer an die Kraftstoffdüse angeschlossenen Kraftstoffleitung vorgeschlagen, welcher sich dadurch auszeichnet, dass die Kraftstoffleitung stromaufwärts der Kraftstoffdüse zumindest zum Teil als eine wärmeaufnehmende Kammer wenigstens eines Wärmeübertragers ausgebildet ist. Diese Ausgestaltung bietet Vorteile für einen Axialkolbenmotor insofern, dass ein mittels der Kraftstoffdüse eingespritzter Kraftstoff vor der Einspritzung aufgeheizt wird und somit die Bildung eines Kraftstoff-Luft-Gemisches innerhalb des Axialkolbenmotors bzw. innerhalb eines Brennraumes des Axialkolbenmotors deutlich homogener und schneller stattfinden kann, was sich in einer weitaus schadstoffärmeren Verbrennung manifestieren kann als dies bei einer Einspritzung mit kaltem Kraftstoff der Fall wäre. Der hierzu verwendete Wärmeübertrager kann zu diesem Zwecke die besagte wärmeaufnehmende Kammer und eine weitere wärmeabgebende Kammer aufweisen, durch welche ein heißes Fluid zum Beheizen des Kraftstoffes geleitet wird.

Auch kann die Kraftstoffleitung alternativ bzw. kumulativ hierzu selbst um eine oder durch eine heiße Baugruppe des Axialkolbenmotors verlegt werden.

Die Verwendung eines Wärmeübertragers jedoch bietet insbesondere dann Vorteile, wenn ein Fluid zum Beheizen des Kraftstoffes verwendet wird, welches ohnehin mit einem aus dem Axialkolbenmotor herausführenden Wärmestrom beaufschlagt ist, wie beispielsweise ein Abgas.

In dem Zusammenhang zur Kraftstoffbeheizung mittels eines Wärmeübertragers ist es dementsprechend dann vorteilhaft, wenn wenigstens eine wärmeabgebende Kammer des Wärmeübertragers zumindest zum Teil als eine Abgasleitung, als eine Kühlmittelleitung und/oder als eine Schmiermittelleitung ausgebildet ist. Diese Vorgehensweise ermöglicht, wie sofort ersichtlich, nicht nur einen Axialkolbenmotor mit einer stabilen und schadstoffarmen Verbrennung, sondern insbesondere auch einen Axialkolbenmotor mit einem gesteigerten Wirkungsgrad bereitzustellen, indem aus dem Axialkolbenmotor austretende Energie rekuperativ wieder in den Kreisprozess des Axialkolbenmotors eingekoppelt wird.

Um alternativ bzw. kumulativ zu den voranstehenden Merkmalen ein verbessertes Betriebs- und Regelverhalten auch unter instationären Betriebsbedingungen bereitzustellen, wird dementsprechend ferner ein Verfahren zum Betrieb eines Axialkolbenmotors mit wenigstens einer Kraftstoffdüse und mit wenigstens einer Kraftstoffleitung vorgeschlagen, wobei die Kraftstoffleitung der Kraftstoffdüse einen Kraftstoffstrom zuführt und sich das Verfahren dadurch auszeichnet, dass der Kraftstoffstrom stromaufwärts dieser Kraftstoffdüse aufgeheizt wird.

Weiterhin wird alternativ bzw. kumulativ zu den übrigen Merkmalen der Erfindung und um ein verbesserten Betriebs- und Regelverhalten auch unter instationären Betriebsbedingungen bereitzustellen ein Verfahren zum Betrieb eines Axialkolbenmotors mit wenigstens einer Kraftstoffdüse und mit wenigstens einer Kraftstoffleitung vorgeschlagen, wobei die Kraftstoffleitung der Kraftstoffdüse einen Kraftstoffstrom zuführt und sich das Verfahren dadurch auszeichnet, dass der Kraftstoffstrom in der Kraftstoffleitung stromaufwärts der Kraftstoffdüse mittels eines außerhalb der Kraftstoffleitung strömenden Fluids aufgeheizt wird. In diesem Zusammenhang kann zusätzlich das den Kraftstoff aufheizende Fluid ein Abgasstrom, einen Kühlmittelstrom und/oder ein Schmiermittelstrom des Axialkolbenmotors sein.

Ferner wird alternativ bzw. kumulativ zu den voranstehenden Merkmalen und um ein verbessertes Betriebs- und Regelverhalten auch unter instationären Betriebsbedingungen bereitzustellen ein Verfahren zum Betrieb eines Axialkolbenmotors mit wenigstens einer Kraftstoffdüse und mit wenigstens einer Kraftstoffleitung vorgeschlagen, bei welchem die Kraftstoffleitung der Kraftstoffdüse einen Kraftstoffstrom zuführt und welches sich dadurch auszeichnet, dass der Kraftstoffstrom in der Kraftstoffleitung stromaufwärts der Kraftstoffdüse mittels eines Wärmestromes des Axialkolbenmotors aufgeheizt wird.

Die voranstehenden Ausgestaltungen zur Aufheizung des Kraftstoffes bzw. zum Verfahren für das Aufheizen eines Kraftstoffes bieten, wie auch vorstehend bereits erläutert, einerseits den Vorteil Kraftstoff bereits vor einer Einspritzung auf ein Temperaturniveau zu heben, welches während der Verbrennung des Kraftstoffes mit Luft dazu führt, dass Rußpartikel aber auch Stickoxide auf Grund der heißen sowie schnellen Verbrennung vermindert werden können.

Auch bieten die voranstehenden Verfahren zum Aufheizen des Kraftstoffes die Möglichkeit, ungenutzte Abwärme des Axialkolbenmotors wieder in den Kreisprozess des Axialkolbenmotors zurückzuführen und somit den thermodynamischen Wirkungsgrad des Axialkolbenmotors anzuheben.

Im vorbezeichneten Fall einer Aufheizung des Kraftstoffes mittels eines Wärmestromes kann insbesondere der Wärmestrom unmittelbar und/oder mittelbar aus einer Reibleistung, aus einem Abwärmestrom und/oder aus einem Abgasstrom des Axialkolbenmotors entnommen werden. Die Reibleistung, welche zwischen bewegten Bauteilen einer Kraftmaschine anfällt, wird in den überwiegenden Ausgestaltungen verbrennungsmotorischer Antriebe über einen Schmiermittelstrom abgeführt, wobei dieser Schmiermittelstrom durch einen Wärmeübertrager geleitet und die mittels der Reibung erzeugte Wärme des Schmiermittelstroms an die Umgebung abgegeben wird. Insofern bietet die Verwendung des ohnehin vorhandenen Schmiermittelstroms und des ohnehin vorhandenen Wärmeübertragers in diesem Schmiermittelstrom zum Aufheizen des Kraftstoffes besondere Vorteile, da auf einen zusätzlichen Aufwand bezüglich der verwendeten Bauteile und des verwendeten Bauraumes verzichtet werden kann.

Mit "Abwärmestrom" ist an dieser Stelle die Summe aller übrigen Wärmestrome einer Kraftmaschine gemeint, welche sich in Strahlungsenergie an der Oberfläche der Kraftmaschine oder aber auch durch Aufheizung des Kühlmittelkreislaufes niederschlägt. Angesichts eines ebenfalls vorhandenen Kühlmittelkreislaufes ist es auch in diesem Falle besonders einfach und vorteilhaft mittels des Kühlkreislaufes bzw. des Kühlwasserkreislaufes eine Kraftstoffleitung über einen Wärmeübertrager zu beheizen.

Zusätzlich oder alternativ zu den vorstehend erläuterten Wärme- bzw. Fluidkreisläufen bietet sich auch die Verwendung des Abgasstromes zum Beheizen des Kraftstoffes an, wobei in den Abgasstrang ein zusätzlicher Wärmeübertrager integriert werden kann, insbesondere wenn bereits ein Wärmeübertrager zum Aufheizen der zugeführten Luft vorgesehen ist.

Der Abgasstrom kann bevorzugt zum Beheizen des Kraftstoffes eingesetzt werden, da das Abgas einer Kraftmaschine üblicherweise besonders hohe Temperaturen, also auch ein besonders hohes Temperaturgefälle zum Kraftstoff, aufweist. Die Verwendung eines einzelnen Stoff- oder Wärmestromes zum Aufheizen des Kraftstoffes schließt allerdings die Verwendung der weiteren Stoff- oder Wärmeströme nicht aus. Demnach kann auch eine Kombination aller genannten Möglichkeiten zum Aufheizen eines Kraftstoffes insofern genutzt werden, dass der Kraftstoff zunächst durch die Öl- oder Wasserkreisläufe vorgeheizt und daraufhin erst mittels des Abgases auf die gewünschte Temperatur nachgeheizt wird.

Vorteilhaft für ein Verfahren zum Betrieb eines Axialkolbenmotors kann der Kraftstoffstrom zur Kraftstoffaufheizung auf eine Temperatur größer 700°C, bevorzugter auf eine Temperatur größer 900°C, noch bevorzugter auf Temperatur größer 1100°C aufgeheizt werden. Auf diese Art und Weise wird sichergestellt, dass der Kraftstoff nicht nur gasförmig vorliegt, sondern auch innerhalb der Kraftstoffleitung Moleküle des Kraftstoffes zur besseren Reaktion mit Verbrennungsluft bereits zerlegt werden.

Um ein verbessertes Betriebs- und Regelverhalten auch unter instationären Betriebsbedingungen bereitzustellen, kann alternativ bzw. kumulativ zu den voranstehenden Merkmalen der Erfindung ein Axialkolbenmotor mit einem Wärmeübertrager, welcher einen Abgasstrom und einen von dem Abgasstrom getrennten Arbeitsgasstrom aufweist, welcher Wärme vom Abgasstrom auf den Arbeitsgasstrom überträgt, welcher eine Längsachse aufweist und welcher eine entlang der Längsachse verlaufende Arbeitsgaskammer aufweist, sich dadurch auszeichnen, dass ein Gehäuse, die Arbeitsgaskammer und/oder die Abgaskammer des Wärmeübertragers an einem ersten Ende ihrer Längserstreckung mechanisch starr und an einem zweiten Ende ihrer Längserstreckung mechanisch elastisch miteinander gekoppelt sind. Die elastische Kopplung kann darüber hinaus eine metallische Membran aufweisen.

Vorteil der vorstehend genannten Ausgestaltung eines Axialkolbenmotors und eines mit diesem Axialkolbenmotor verwendeten Wärmeübertragers ergibt sich aus der besonderen Befähigung des Wärmeübertragers auch bei einem besonders hohen Temperaturniveau des Abgasstromes bzw. bei einer sehr hohen Temperaturdifferenz zwischen dem Abgasstrom und dem Arbeitsgasstrom betriebssicher und gasdicht eine Wärmeübertragung der beiden genannten Fluide zu ermöglichen. Das hohe Temperaturniveau bewirkt erwartungsgemäß eine ungleichmäßige Längendehnung in dem Wärmeübertrager, wobei die ungleichmäßige Wärmedehnung zu besonders hohen Wärmespannungen im Gehäuse oder in den beiden Kammern des Wärmeübertragers führen kann. Diese Wärmespannungen führen im schlimmsten Fall zum Versagen des Wärmeübertragers, was zu einem Ausfall des Axialkolbenmotors führt.

Die einerseits starr gekoppelten Kammern des Wärmeübertragers oder eine starr mit dem Gehäuse gekoppelte Kammer des Wärmeübertragers führen zu unterschiedlichen Längendehnungen der jeweiligen Bauteile am jeweils anderen Ende, dem zweiten Ende der Längserstreckung, des Wärmeübertragers. An diesem zweiten Ende der Längserstreckung des Wärmeübertragers ist die zuvor genannte elastische Membran vorgesehen, welche gasdicht die Arbeitsgaskammer, die Abgaskammer und/oder das Gehäuse des Wärmeübertragers untereinander sowie gegen die Umgebung abdichtet und durch ihre elastischen Eigenschaften einen mechanischen Längenausgleich der miteinander gekoppelten Bauteile ohne Auftreten unzulässig hoher Wärmespannungen ermöglicht.

Es versteht sich, dass eine elastische Kopplung über eine Membran an dem erste Ende der Längserstreckung des Wärmeübertragers auch bei einem Wärmetauscher eingesetzt werden kann, welcher nicht aus unterschiedlichen Werkstoffen gefertigt wird und somit unterschiedliche Längendehnungen innerhalb des Wärmeübertragers zunächst nicht zu erwarten sind. Eine ungleichmäßige Temperaturverteilung im Wärmeübertrager kann somit den vorteilhaften Einsatz einer Membran zur elastischen Kopplung erfordern.

Vorzugsweise ist die elastische Kopplung an einer kalten Seite des Wärmetauschers vorgesehen, da dann - insbesondere bei hohen Temperaturen - ein negativer Einfluss der Wärme auf die elastische Kopplung minimiert werden kann.

Es versteht sich weiterhin, dass die Merkmale der vorstehend bzw. in den Ansprüchen beschriebenen Lösungen ggf. auch kombiniert werden können, um die Vorteile entsprechend kumuliert umsetzen zu können.

Weitere Vorteile, Ziele und Eigenschaften vorliegender Erfindung werden anhand nachfolgender Beschreibung anliegender Zeichnungen erläutert. Es zeigen:
- Figur 1: eine schematische Schnittdarstellung eines Brenners für einen Axialkolbenmotor mit Hauptbrenner und Vorbrenner;
- Figur 2: eine schematische Schnittdarstellung des Vorbrenners eines Axialkolbenmotors nach Figur 1;
- Figur 3: eine Aufsicht auf den Vorbrenner nach den Figuren 1 und 2;
- Figur 4: eine schematische Schnittdarstellung eines Axialkolbenmotors mit einem Brenner nach dem Stand der Technik zur Erläuterung des technologischen Hintergrundes, wobei zu dem Brenner nach Figuren 1 bis 3 gleich wirkende Baugruppen auch gleich beziffert sind;
- Figur 5: eine schematische Schnittdarstellung des Hauptbrenners eines Axialkolbenmotors mit einem Ringraum als Hauptdüsenraum;
- Figur 6: eine weitere schematische Schnittdarstellung des Hauptbrenners nach Figur 5 mit einem Vorbrenner in Schnittdarstellung;
- Figur 7: eine Draufsicht der in Figur 6 dargestellten Anordnung aus Hauptbrenner und Vorbrenner;
- Figur 8: einen Wärmeübertrager in Schnittdarstellung mit einer Kraftstoffheizung für einen Axialkolbenmotor;
- Figur 9: die Anordnung aus Hauptbrenner und Vorbrenner nach Figur 6 mit einer weiteren Kraftstoffheizung; und
- Figur 10: eine Detaildarstellung der Kraftstoffheizung nach Figur 9.

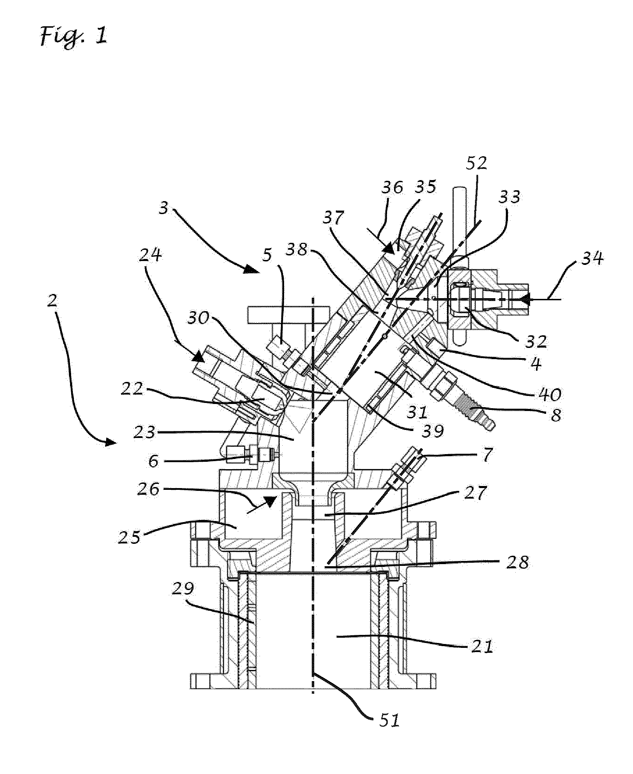

Der in Figuren 1 bis 3 dargestellte Brenner für einen Axialkolbenmotor 1 weist einen Hauptbrenner 2 und einen Vorbrenner 3 auf.

Der über eine Heißgaszuführung 30 an einem Hauptdüsenraum 23 des Hauptbrenners 2 angeschlossene Vorbrenner 3 weist weiterhin zur Bildung eines Brennstoff-Luft-Gemisches eine Vorluftleitung 35 und eine Vordüse 32 auf. Die Vorluftleitung 35 mündet hierbei in ein Vormischrohr 37, wobei die Vorluftleitung 35 einen Vorluftstrom 36 in dieses Vormischrohr 37 befördert.

Weiterhin ist dem Vormischrohr 37 ein Vordüsenraum 33 zugeordnet, in welchen über die Vordüse 32 ein Vorbrennstoffstrom 34 eingeleitet wird. Das in dem Vormischrohr 37 bereitgestellte Brennstoff-Luft-Gemisch wird im Betrieb des Axialkolbenmotors 1 am Austritt dieses Vormischrohres 37 im Wesentlichen isobar verbrannt und einem Vorbrennraum 31 zugeführt.

Die Verbrennung des Brennstoff-Luft-Gemisches erfolgt hierbei insbesondere in einer Vorbrennzone 38 an einem Übergang zwischen dem Vormischrohr 37 und dem Vorbrennraum 31, wobei der Vorbrennraum 31 mit heißem Abgas geflutet wird. Bei dem im Vorbrenner 3 erzeugten Abgas handelt es sich vorzugsweise um stöchiometrisches Abgas, welches nach dem Eintritt in den Vorbrennraum 31 über die Heißgaszuführung 30 dem Hauptbrenner 2 zugeführt wird.

Der über eine Vorbrennraumwand 39 weiterhin abgegrenzte und gekühlte Vorbrennraum 31 ist bevorzugt zylinderförmig aufgebaut, wobei die Heißgaszuführung 30 in dieser Ausführungsform konzentrisch zum Vorbrennraum 31 angeordnet ist.

Die zylindrische Vorbrennraumwand 39 weist zusätzliche Hohlkammern auf ihrer dem Vorbrennraum 31 abgewandten Seite auf, welche eine zusätzliche Isolation gegen die Umgebung des Vorbrenners 3 bewirken. Hierzu kann der an der Vorbrennraumwand 39 vorgesehene Hohlraum mit Luft, Abgas, dem Vorluftstrom 36 oder mit Kühlwasser geflutet sein. Die Durchführung des Vorluftstromes 36 durch den Hohlraum der Vorbrennraumwand 39 bewirkt zusätzlich eine rekuperative Rückspeisung der an der Vorbrennraumwand 39 abgegebenen Wärme, die über die Vorluftleitung 35 wieder dem Vorbrenner 3 zugeführt wird.

Im Gegensatz hierzu sind das Vormischrohr 37 und insbesondere die Vorbrennzone 38 außerhalb einer Symmetrieachse des Vorbrennraumes 31 angeordnet. Eine Symmetrie- bzw. Rotationsachse des Vormischrohres 37 schneidet in dieser Ausführungsform die Rotationsachse des Vorbrennraumes 31 innerhalb der Heißgaszuführung 30.

Diese unsymmetrische Anordnung zwischen Vormischrohr 37 und Vorbrennraum 31 hat im Betrieb des Vorbrenners 3 zur Folge, dass eine Zirkulation des erzeugten Abgases dergestalt zustande kommt, dass stets ein Abgasstrom auf einen Eingang einer Hilfsheißgaszuführung 40 trifft. Diese Hilfsheißgaszuführung 40 wiederum ist in der beschriebenen Ausführungsform mit dem Vordüsenraum 33 verbunden und erzeugt damit eine interne Abgasrückführung innerhalb des Vorbrenners 3.

Die interne Abgasrückführung durch die Hilfsheißgaszuführung bewirkt weiterhin zumindest ein Aufheizen und bevorzugt ein Verdampfen des Vorbrennstoffstromes 34 innerhalb des Vordüsenraumes 33, sofern das Abgas eine ausreichend hohe Temperatur aufweist.

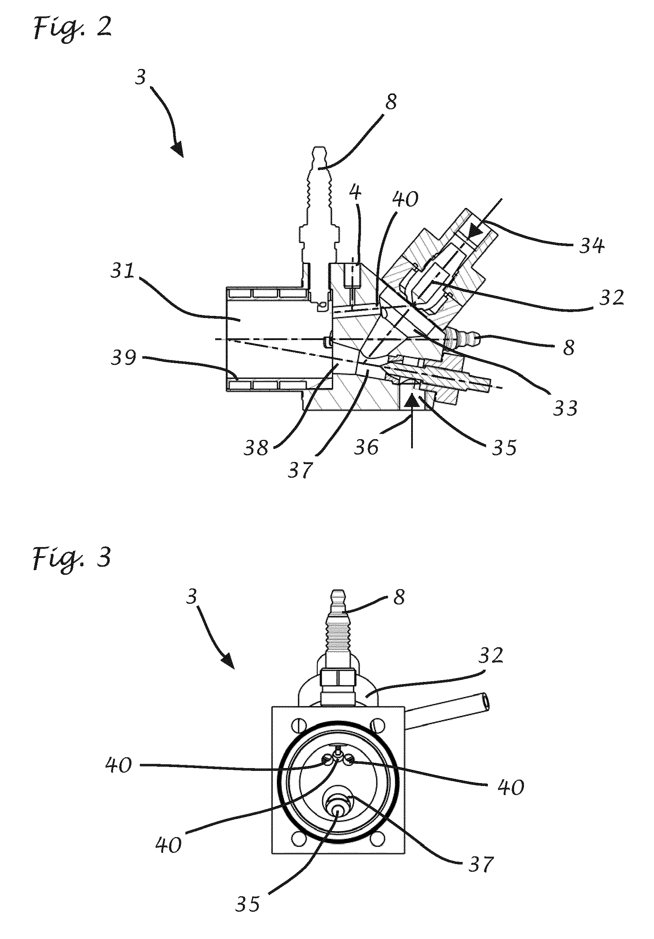

Wie insbesondere in Figur 3 dargestellt, verfügt der Vorbrenner 3 über drei einzelne Hilfsheißgaszuführungen 40 zwischen dem Vorbrennraum 31 und dem Vordüsenraum 33. Zur Schnittebene nach Figur 2 sind diese Hilfsheißgaszuführungen 40 symmetrisch angeordnet, wobei die erhöhte Anzahl an Hilfsheißgaszuführungen 40 für einen höheren Abgasstrom Sorge tragen.

In diesem Zusammenhang ist es auch denkbar, dass die zusätzlichen Hilfsheißgaszuführungen 40 auch steuerbar ausgeführt sind, so dass ein dem Vordüsenraum 33 zugeführter Abgasstrom in seiner Menge oder in seiner Masse geregelt werden kann. Der Hilfsheißgassensor 4, welcher in diesem Fall ein Temperatur- oder Drucksensor oder aber auch eine Lambdasonde zur Messung der Abgaszusammensetzung sein kann, wird ggf. zu diesen Regelungszwecken herangezogen.

Ist eine ausreichend hohe Temperatur des Abgases vorhanden, beispielsweise eine Temperatur von 700°C, bewirkt das rückgeführte Abgas im Vordüsenraum 33 außer der Zerstäubung und Verdampfung des Vorbrennstoffstromes 34 auch erste Dissoziationsvorgänge bzw. Vorreaktionen innerhalb des Vorbrennstoffstromes 34. Es sei an dieser Stelle betont, dass mit "Vorreaktion" jegliche Reaktion des Brennstoffes, insbesondere auch Reaktionen ohne Beteiligung von Sauerstoff, gemeint ist.

Diese Ausgestaltung des Vorbrenners 3 hat somit eine besonders effiziente, heiße und schnelle Verbrennung in der Vorbrennzone 38 zur Folge, wodurch insbesondere die Rußbildung aber auch die Stickoxidbildung gehemmt wird. Die Rußbildung wird durch diese Ausgestaltung der Verbrennung mittels der sehr hohen Verbrennungstemperatur gehemmt.

Hohe Temperaturen während einer Verbrennung eines Brennstoff-Luft-Gemisches könnten jedoch unter Einsetzen des Zeldovich-Mechanismus mithin eine sehr hohe Konzentration an Stickoxiden bewirken. Daher wird ein verminderter Ausstoß an Stickoxiden trotz einer besonders heißen Verbrennung zunächst seitens des Fachmannes nicht erwartet. Die thermische Aufbereitung des Brennstoffes im Vordüsenraum 33, aber auch im Hauptdüsenraum 23, bewirkt anscheinend vorteilhaft jedoch auch einen bereits einsetzenden Molekülzerfall des Brennstoffes und somit anscheinend auch eine vermehrte Bildung von Radikalen, welche die Verbrennungsreaktionen deutlich beschleunigen und mithin ein Entstehen von Stickoxiden hemmen.

Die Reaktionsgeschwindigkeiten für die meisten Verbrennungsvorgänge hängen bekanntermaßen sowohl von der Temperatur als auch vom Druck während der Verbrennung ab. So erfolgt eine Reaktion der Brennstoffbestandteile mit Luft um Größenordnungen schneller, wenn die Verbrennungstemperatur oder der Verbrennungsdruck höher sind, wie dies in der vorstehend erläuterten Ausführungsform umgesetzt wird.

Nach der vorstehend ebenfalls erläuterten Aufbereitung des Brennstoffes, bleibt für die Bildung von thermischem Stickoxid während einer Verbrennung auf einem hohen Temperaturniveau wenig Zeit, wenn die Verbrennungsedukte, also die Luft und der Brennstoff, ausreichend vorgeheizt sind und ein Kettenstart sowie eine Kettenverzweigung der Verbrennung bereits unmittelbar vor oder während der Zumischung des Brennstoffes zur Verbrennungsluft, also vor der eigentlichen Reaktionszone, einsetzen. In diesem Zusammenhang ist es besonders vorteilhaft, wenn der Brennstoff und/oder die Verbrennungsluft bis zu einer Temperatur vorgeheizt werden, ab welcher gerade kein thermisches Stickoxid gebildet wird bzw. Gleichgewichtsreaktionen für die Bildung von thermischem Stickoxid nach dem Zeldovich-Mechanismus gerade keinen nennenswerten Umsatz aufweisen.

Es wird daher besonders bevorzugt ein Vorbrennstoffstrom 34 im Vordüsenraum 33, aber auch ein Hauptbrennstoffstrom 24 im Hauptdüsenraum 23 auf eine Temperatur um 1000°C, unter welcher ein nennenswerter Stickoxidumsatz gerade nicht einsetzt, vorgeheizt. Es ist sofort ersichtlich, dass der Brennstoff im Vordüsenraum 33 oder im Hauptdüsenraum 23 auch eine höhere Temperatur aufweisen kann, wenn während der Mischung des Brennstoffes im Vormischrohr 37 oder einem Hauptmischrohr 27 des Hauptbrenners 2 die Temperatur auf Grund der relativ zum Brennstoff kalten Verbrennungsluft weit unter 1000°C absinkt.

Für Kontroll- und Regelungsvorgänge innerhalb des Vorbrenners 3 verfügt der Vorbrenner 3 weiterhin über eine Zündkerze 8 sowie über einen Hilfsheißgassensor 4 sowie einen Heißgassensor 5. Während die Zündkerze 8, wie sofort ersichtlich für einen Startvorgang des Vorbrenners 3 herangezogen werden kann, ist es möglich über den Hilfsheißgassensor 4 entweder die Temperatur, den Druck oder die Zusammensetzung des in der Hilfsheißgaszuführung 40 beförderten Abgases zu messen. Auf die gleiche Art und Weise kann auch der Heißgassensor 5 zur Kontrolle des durch die Heißgaszuführung 30 dem Hauptbrenner 3 zugeführten Abgases herangezogen werden.

In einer ähnlichen Art und Weise wie Abgas in dem Vorbrenner 3 dem Vordüsenraum 33 zugeführt wird, findet auch in dem Hauptbrenner 2, wie vorstehend angedeutet, eine Aufbereitung des über eine Hauptdüse 22 eingespritzten Hauptbrennstoffstromes 24 statt.

Wie sofort ersichtlich arbeitet der Vorbrenner 3 hierbei als externer Heißgaserzeuger für den Hauptbrenner 2, welcher bei diesem Ausführungsbeispiel selbst keine interne Abgasrückführung aufweist.

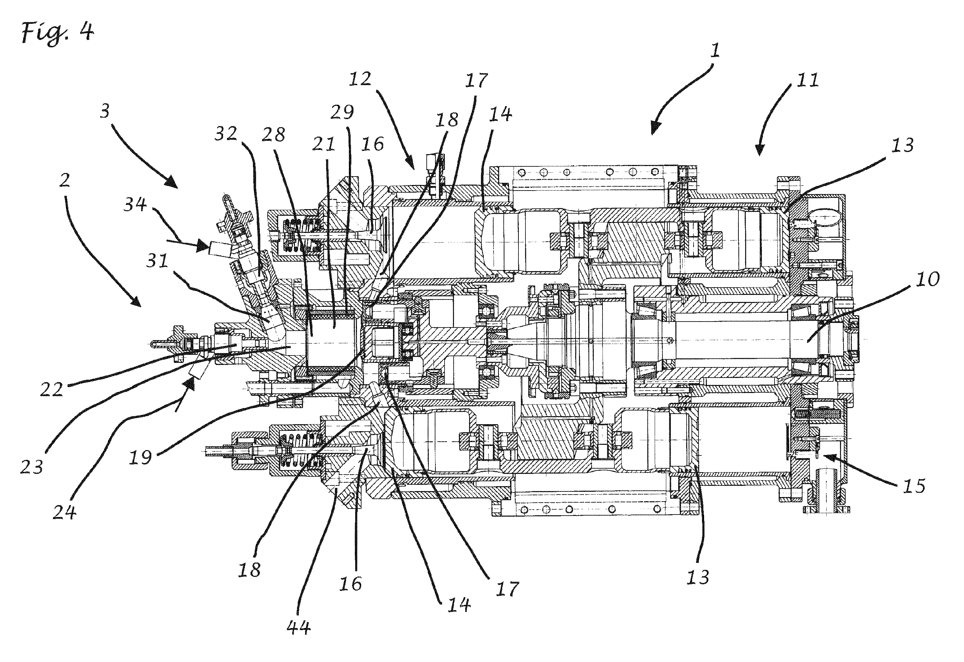

Der Hauptdüsenraum 23 ist, anders als der Vordüsenraum 33, auf einer Achse mit dem Hauptmischrohr 27 und einem Hauptbrennraum 21 angeordnet. Eine asymmetrische Anordnung zwischen dem Hauptdüsenraum 23 und dem Hauptbrennraum 21 bzw. dem Hauptmischrohr 27 ist denkbar. Die über einen Hauptluftstrom 26 dem Hauptmischrohr 27 zugeführte Verbrennungsluft strömt seitlich über einen Ringkanal in das Hauptmischrohr 27 ein und reagiert dort unter Wärmefreisetzung und isobar in einer Hauptbrennzone 28, um daraufhin als Abgas zunächst in den Hauptbrennraum 21 zu münden. Der Hauptluftstrom 26 wird über eine Hauptluftleitung 25 zum Hauptmischrohr 27 des Hauptbrenners 2 befördert, wobei die Hauptluftleitung 25 zusammen mit der Vorluftleitung 35 an eine nicht dargestellte Verdichterstufe 11 des Axialkolbenmotors 1 angeschlossen ist, wie diese nach dem Stand der Technik bekannt und in Figur 4 dargestellt ist.

Auch in dem Hauptbrenner 2 sind zum Zwecke der Verbrennungs- und Leistungsregelung Sensoren für eine Steuereinheit vorgesehen. So ist an dem Hauptdüsenraum 23 ein Düsenraumsensor 6 vorgesehen, mittels welchem die Temperatur, der Druck und/oder die Abgaszusammensetzung innerhalb des Hauptdüsenraumes 21 erfasst werden kann. Zusätzlich verfügt das Hauptmischrohr 27 über einen Mischrohrsensor 7, welcher in der Hauptbrennzone 28 die Zusammensetzung, die Temperatur oder, falls notwendig, den Druck in der Hauptbrennzone 28 ermitteln und an eine Steuereinheit weiterleiten kann.

Es ist sofort ersichtlich, dass ein Hohlraum des Vorbrennraumes 39 auch zur Beheizung des Vorbrennstoffstromes 34 oder des Hauptbrennstoffstromes 24 herangezogen werden kann. Wird der Brennstoff durch die Hohlkammer der Vorbrennraumwand geführt, nimmt er bereits vor der Einspritzung in den Vordüsenraum 33 oder den Hauptdüsenraum 23 Wärmeenergie auf, welche eine Spraybildung bzw. einen Tropfenzerfall während des Einspritzens positiv beeinflusst indem dem Brennstoff Gemischbildungsenergie bereits vor einem Mischvorgang mit Luft zugeführt wird. Der Vorbrennstoffstrom 34 oder der Hauptbrennstoffstrom 24 können unter bestimmten Betriebsbedingungen, etwa bei einer Volllast des Axialkolbenmotors 1, auch bereits derart aufgeheizt werden, dass er in einer Kraftstoffleitung 41 oder aber wegen des bestehenden Druckabfalles während der Einspritzung in den Vordüsenraum 33 bzw. Hauptdüsenraum 23 in den gasförmigen Aggregatszustand übergehen. Wie sofort ersichtlich, können die vorstehend erläuterten Ausgestaltungen zur Vorbrennraumwand 39 auch auf eine Hauptbrennraumwand 29 angewandt werden.

In der anhand der Figuren 1 bis 3 beschriebenen Brenneranordnung des Axialkolbenmotors 1 wird zudem ein Verbrennungsverfahren derart appliziert, dass nach der Mischung des Vorbrennstoffstromes 34 mit dem Vorluftstrom 36 keine weitere Zuführung von Verbrennungsluft erfolgt, bis das im Hauptdüsenraum 23 erzeugte Gemisch aus Hauptbrennstoffstrom 24 und Heißgas bzw. Abgas des Vorbrenners 3 dem Hauptmischrohr 27 zugeführt wird. Die Zumischung des Hauptluftstromes 26 erfolgt im Gegensatz zum Stand der Technik im bzw. unmittelbar vor dem Hauptmischrohr 27 und nicht erst in der Hauptbrennkammer 21. Die hierbei applizierte einstufige Verbrennung, insbesondere im Vorbrenner 3, bewirkt eine gute Regelbarkeit des Restsauerstoffgehaltes, welcher nahe null eingestellt wird. Somit erfolgt in im Hauptdüsenraum 23 eine Aufbereitung des mit dem Hauptbrennstoffstrom 24 eingebrachten Brennstoffes, ohne dass bereits eine Oxidation eintritt. Mithin bewirkt diese Verfahrensführung ohne Restsauerstoff im zugeführten Heißgas, dass eine Schadstoffproduktion, beispielsweise die Bildung von Stickoxiden, gehemmt ist.

Eine Ausführungsform eines Axialkolbenmotors 1 nach dem Stand der Technik mit einer Verdichterstufe 11 wird nachstehend zur Erläuterung des technologischen Hintergrundes anhand der Figur 4 beschrieben.

Die Verdichterstufe 11 mit parallel zueinander angeordneten Verdichterkolben 13 saugt über einen Verdichtersteuertrieb 15 Luft aus einer Umgebung an und befördert diese Luft nach erfolgter Verdichtung in eine nicht dargestellte Luftleitung, welche an dem Brenner nach Figur 1 zumindest in die Hauptluftleitung 25 und in die Vorluftleitung 35 mündet.

Der Axialkolbenmotor 1 nach Figur 4 verfügt ferner über einen Hauptbrenner 2 und einen Vorbrenner 3 nach dem Stand der Technik, welche über ein im Hauptbrennraum 21 erzeugtes Abgas eine Expanderstufe 12 mit Expanderkolben 14 befeuern bzw. antreiben, wobei an dieser Stelle auch der Brenner nach Figuren 1 bis 3 unmittelbar angesetzt werden kann. Zu diesem Zwecke wird das aus dem Hauptbrennraum 21 austretende Abgas über jeweils einen Schusskanal 18 an jeweils einen der Expanderkolben 14 weitergeleitet, welcher unter positiver Kolbenarbeit eine Leistung an eine Abtriebswelle 10 des Axialkolbenmotors 1 abgibt. Das entspannte Abgas wird, nachdem es über Expandereinlassventile 17 den Expanderkolben 14 zugeführt worden ist, über Expanderauslassventile 16 in eine Abgasleitung 44 geleitet.

Im Unterschied zu der Ausführungsform des Hauptbrenners 2 nach Figur 1 verfügt der Hauptbrenner 2 nach Figur 4 nicht über eine Lavaldüse 9, auf welche bei einem Einsatz in dem Axialkolbenmotor 1 auch verzichtet werden kann, sondern über einen Brennraumboden 19, auf welchen das aus dem Hauptbrenner 2 strömende Abgas trifft bzw. durch welchen das Abgas in die Schusskanäle 18 umgeleitet wird.

An dieser Stelle wird ein weiterer Vorteil des erfindungsgemäßen Vorbrenners 3 und Hauptbrenners 2 nach der Figur 1 ersichtlich, da jene Ausführungsform durch ihre geometrische Ausgestaltung weniger Pulsationen innerhalb der beiden Teilbrenner bewirkt. Auch verfügt ein Hauptbrenner 2 nach dem Stand der Technik nicht über ein Hauptmischrohr 27, in welchem der Hauptluftstrom 26 dem Hauptbrennstoffstrom 24 zugeführt wird. Der in Figur 4 dargestellte Axialkolbenmotor 1 verfügt stattdessen über eine Hauptbrennzone 28, welche bereits stark in den Hauptbrennraum 21 hineinragt. Ein wesentlicher Unterschied zur erfindungsgemäßen Ausgestaltung des Axialkolbenmotors 1 liegt jedoch in der Vorbrennkammer 3, welche im Stand der Technik keine Hilfsheißgaszuführung 40 und somit im Vorbrenner 3 auch keine stabilisierte Flammbildung aufweist.

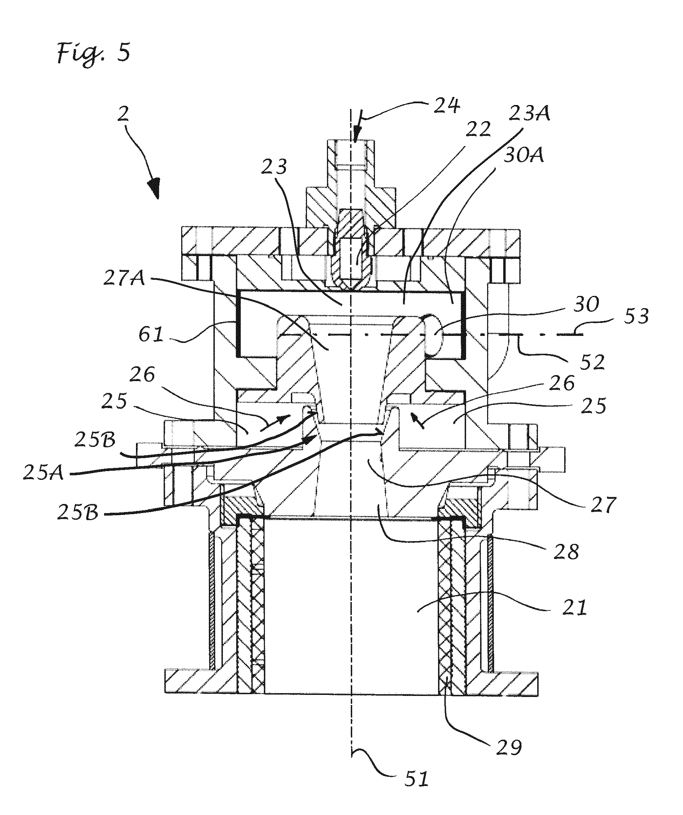

Die alternative Ausführungsform eines Hauptbrenners nach Figur 5 verfügt im Gegensatz zu den vorherigen beschriebenen Ausführungsformen einen Hauptdüsenraum 23, welcher von einem Ringraum 30A umgeben ist. In diesen Ringraum 30A mündet die Heißgaszuführung 30, wobei eine Zuführungsachse 53 dieser Heißgaszuführung 30 in der zur Darstellung der Figur 5 verwendeten Projektionsebene eine Hauptbrennerachse 51 in einem Winkel von annähernd 90° schneidet. Die Hauptbrennerachse 51 ist zugleich Symmetrieachse des dargestellten Hauptbrennraumes 21, des Hauptmischrohres 27 und des Hauptdüsenraumes 23 sowie des Ringraums 30A. Ähnlich zum Ringraum 30A ist auch die Hauptluftleitung 25, welche den Hauptluftstrom 26 führt, kurz vor Eintritt in das Hauptmischrohr 27 als Ringraum ausgebildet. Auch diese Ausgestaltung der ringförmigen Hauptluftleitung 25 führt zu einer weitestgehend homogenen Gemischbildung innerhalb des Hauptmischrohres 27, wodurch eine gleichmäßige Verbrennung in der Hauptbrennzone 28 folgt.

Die zur Vermeidung von Wandwärmeverlusten verwendete Hauptbrennraumwand 29 wird in entsprechender Wirkweise auch nach der vorliegenden Ausgestaltung des Hauptbrenners 2 in dem Ringraum 30A eingesetzt. Hierzu verfügt der Ringraum 30A über eine zylinderförmig an einer Außenwand des Ringraums 30A angebrachte Isolation 61. Die Isolation 61 ist, wie auch die Hauptbrennraumwand 29 aus einem keramischen Werkstoff hergestellt und vermindert die Wärmeleitung des in dem Ringraum 30A befindlichen heißen Abgases zu dem restlichen Gehäuse des Hauptbrenners 2. Das Abgas vermischt sich vor dem Eintritt in das Hauptmischrohr 27 mit dem Hauptbrennstoffstrom 24, welcher über die Hauptdüse 22 dem Vordüsenraum 23 zugeführt wird, über eine Ringdüse 23A.

Im Betrieb des Hauptbrenners 2 ermöglicht die ringförmige Ausgestaltung des Hauptdüsenraumes 23 eine Zirkulation des über die Heißgaszuführung 30 zugeführten Abgases um die Hauptbrennerachse 51, wodurch tote Gebiete innerhalb des Hauptdüsenraumes 23 oder aber auch innerhalb der Heißgaszuführung 30 weitgehend vermieden werden und eine Rußbildung, zumindest eine mischungsbedingte Rußbildung, somit unterdrückt werden kann.

Die Zuleitung zum Hauptmischrohr 27 ist weiterhin als Mischdüse 27A ausgebildet, in welcher die Strömung aus Hauptbrennstoffstrom 24 und Abgas vor dem Eintritt in das Hauptmischrohr nochmals beeinflusst werden kann. Die dargestellte konische Ausbildung führt somit zu einer Beschleunigung der Gasströmung und wirkt sich einerseits positiv auf das Mischverhalten des Hauptbrennstoffstromes 24 mit dem Abgas aus und erzeugt andererseits an einer Ringdüse 25A eine Ejektorströmung, welche die weitere Durchmischung mit einem aus der Ringdüse 25A austretenden Hauptluftstrom begünstigt.

Die Ringdüse 25A ist vor dem Mischrohr 27 sowie radial umlaufend angeordnet, um dem aufbereiteten Brennstoffstrom den Hauptluftstrom 26 gleichmäßig zuzuführen. Zwei konisch ausgebildete Düsenoberflächen 25B der Ringdüse 25A verlaufen hierbei in einem spitzen Winkel in das Mischrohr 27, wobei auch hier tote Gebiete, beispielsweise durch einen Strömungsabriss, vermieden werden. Der flache Einlaufwinkel der Ringoberflächen 25B begünstigt ferner in überraschender Weise die Homogenisierung der eingeblasenen Luft mit dem Brennstoffstrom, wodurch Schadstoffe auf Grund der schnellen und homogenen Verbrennung vermieden werden. Für eine optimale Ausgestaltung der in der Ringdüse 25A vorliegenden Strömungsgeschwindigkeit sind die beiden Düsenoberflächen 25B der Ringdüse 25A mit unterschiedlichen Kegelwinkeln ausgeführt.

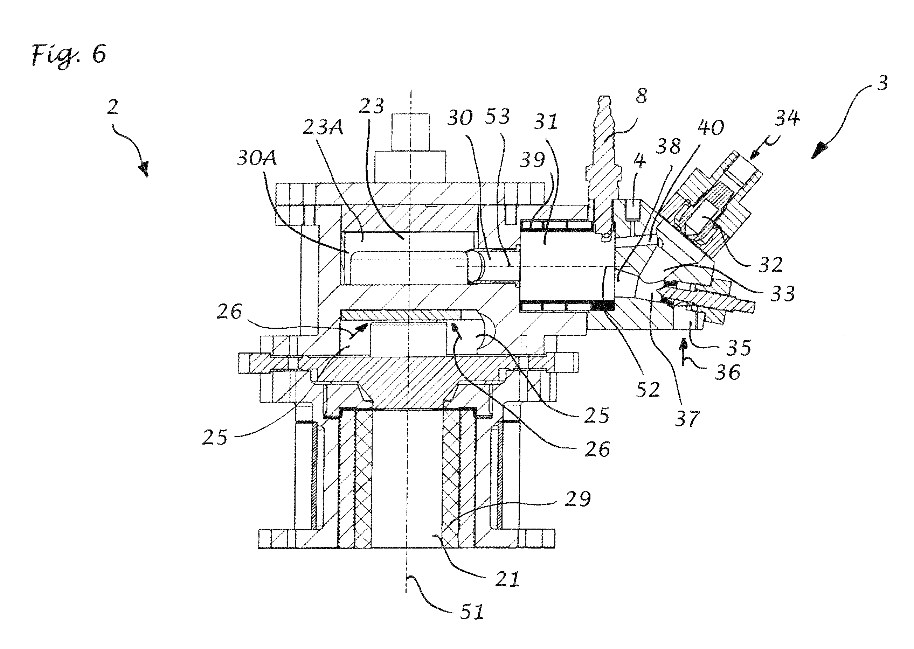

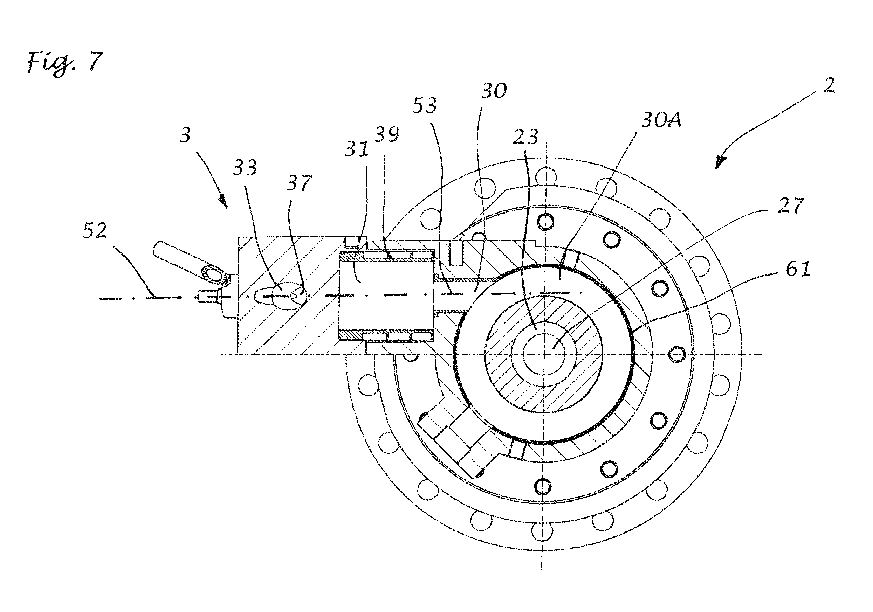

Der nach den Figuren 6 und 7 an die Heißgaszuführung 30 vorgeschaltete Vorbrenner 3 erzeugt, wie in den vorherigen Ausgestaltungen auch, ein stöchiometrisches Abgas und führt dieses weitestgehend tangential in den Ringraum 30A. Bei dieser Ausführungsform fallen die Vorbrennerachse 52 und die Heißgaszuführungsachse 53 aufeinander, da die Heißgaszuführung 30 als zylindrisches Rohr koaxial zum Vorbrenner 3 bzw. zum Vorbrennraum 31 ausgeführt ist.

Die tangentiale Anordnung des Vorbrenners 3 bzw. der Heißgaszuführung 30 zum Hauptdüsenraum 23 bewirkt eine - nach Figur 7 im Uhrzeigersinn - induzierte Strömung, welche zu einer weitestgehend homogenen Vermischung des Hauptbrennstoffstromes 24 mit dem Abgasstrom des Vorbrenners führt. Selbiges bedingt auch die Ringdüse 23A ergänzend.

Auch der Vorbrennraum 31 verfügt in dieser Ausgestaltung über eine Vorbrennraumwand 39, welche keramisch ausgebildet ist, um Wärmeverluste zu vermeiden und den Wirkungsgrad des Axialkolbenmotors 1 zu erhöhen. Das Vormischrohr 37 sowie die Vorbrennzone 38 sind im Gegensatz zu der entsprechenden Ausgestaltung im Hauptbrenner 2 in einem sehr viel kleineren Winkel zur Vorbrennerachse 52 angeordnet. Diese abweichende Anordnung begünstigt, anders als im Hauptbrenner 2 eine Zirkulation innerhalb der Projektionsebene nach Figur 6, sodass das aus der Vorbrennzone 38 austretende Abgas teilweise auf die Hilfsheißgaszuführung 40 trifft und hierüber dem Vordüsenraum 33 zugeführt werden kann. Im bzw. unmittelbar stromabwärts des Vordüsenraums 33 erfolgt die Zumessung des aus den vorherigen Ausführungsbeispielen bekannten Zumessens des Vorbrennstoffstromes 34 und des Vorluftstromes 36 über die jeweilige Vordüse 32 und die Vorluftleitung 35.

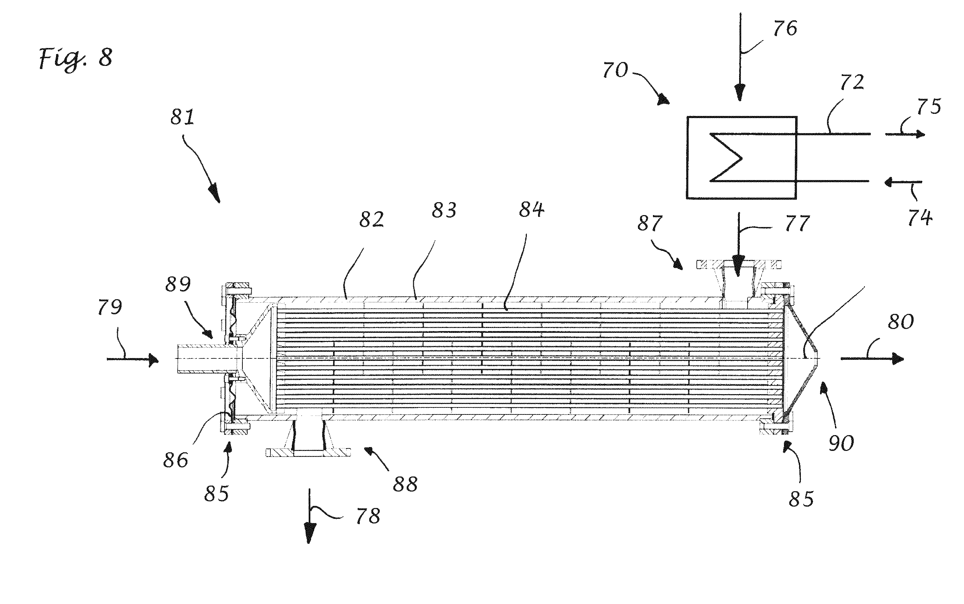

Um die auftretenden Temperaturen an dem Axialkolbenmotor 1 auch innerhalb eines Wärmeübertragers 81 zu beherrschen, verfügt der nach Figur 8 ausgeführte Wärmeübertrager 81 über eine metallische Membran 86, welche an einem Ende der Längserstreckung des Wärmeübertragers 81 das Gehäuse 82 bzw. die Abgaskammer 83 mechanisch und gasdicht mit der Arbeitsgaskammer 84 verbindet. In der dargestellten Ausführungsform tritt durch die Membran 86 der Arbeitsgaskammereintritt 89, welcher den Arbeitsgaskaltstrom 79 in den Wärmeübertrager 81 führt. Dieser Arbeitsgaskaltstrom 79 nimmt beim Durchströmen der Arbeitsgaskammer 84 Wärme eines in die Abgaskammer 83 geführten Abgaszwischenstromes 77 auf. Nach der erfolgten Wärmeübertragung tritt an einem Arbeitsgaskammeraustritt 90 ein Arbeitsgasheißstrom 80 aus dem Wärmeübertrager 81wieder aus, welcher im weiteren Verlauf des Prozesses der Expanderstufe 12 des Axialkolbenmotors 1 bzw. dem Hauptbrenner 2 und dem Vorbrenner 3 zugeführt wird. Der Arbeitsgaskaltstrom 79 wird, wie vorstehend bereits erläutert, der Expanderstufe 12 des Axialkolbenmotors 1 entnommen. Weiterhin verfügt die Abgaskammer 83 über einen Abgaskammereintritt 87, in welchen der entspannte Abgaszwischenstromes 77 oder - bei einem anderen Ausführungsbeispiel - der entspannte Abgasheißstrom 76 unmittelbar eintritt, und über einen Abgaskammeraustritt 88, aus welchem der entspannte und abgekühlte Abgaskaltstrom 78 an eine Umgebung abgeführt wird.

Bevor der Abgaszwischenstrom 77 dem Wärmeübertrager 81 zugeführt wird, erfolgt bereits eine teilweise Wärmeübertragung in einem Kraftstoffwärmeübertrager 70 auf einen Kraftstoffkaltstrom 74. Der Kraftstoffkaltstrom 74 nimmt, wie der Arbeitsgaskaltstrom 79 auch, über einen Abgasheißstrom 76 zur Verfügung gestellte Wärme auf und führt diese nach Überführung in einen Kraftstoffheißstrom 75 dem Axialkolbenmotor 1 rekuperativ wieder zu. Ohne Verwendung eines Kraftstoffwärmeübertragers 70 oder eines Wärmeübertragers 81 würde die in dem Abgas zur Verfügung stehende Wärmemenge ungenutzt an die Umgebung abgegeben werden, wodurch die dargestellte Anordnung den thermodynamischen Wirkungsgrad des Axialkolbenmotors 1 anzuheben vermag.

Wie bereits erläutert, verfügt der Wärmeübertrager 81 über die auch zum Längenausgleich vorgesehene Membran 86, welche eine ungleichmäßige Längendehnung zwischen der Abgaskammer 83, dem Gehäuse 82 und der Arbeitsgaskammer 84 erst ermöglicht. Die vorstehend genannten Kammern und das Gehäuse 82, welches in diesem Falle der Abgaskammer 83 entspricht, sind an dem der Membran 86 entgegengesetzten Ende des Wärmeübertragers 81 starr miteinander verbunden. Die Verbindung erfolgt hierbei über die Schraubverbindung 85, welche die beiden Kammern untereinander sowie gegenüber der Umgebung auch gasdicht verschließt.

Mit "starr" ist in diesem Zusammenhang der Umstand gemeint, dass ein Längenausgleich an der Schraubverbindung 85 der durch diese Schraubverbindung 85 verbundenen Bauteile nicht bzw. unwesentlich möglich ist. Ein Längenausgleich in Querrichtung zu einer Wärmetauschersymmetrieachse 91 ist durch die gewählte Bauform nicht in dem Maße erforderlich, wie sie unter Zuhilfenahme der Membran 86 in Längsrichtung erforderlich ist. Der Wärmeübertrager 81 verfügt im Verhältnis zu seiner Ausdehnung in Querrichtung eine vielfach höhere Ausdehnung in Längsrichtung, wodurch die ungleichmäßige Längendehnung der Abgaskammer 83, der Arbeitsgaskammer 84 und ggf. des Gehäuses 82 erst auftritt. Insbesondere können durch die elastische Kopplung, welche bei diesem Ausführungsbeispiel durch die Membran 86 realisiert ist, Unterschiede in der Längenausdehnung des Gehäuses 82 sowie der Trennung zwischen Abgaskammer 83 und Arbeitsgaskammer 84 ausgeglichen werden. Dadurch, dass die elastische Kopplung am kalten Ende des Wärmeübertragers vorgesehen ist, kann die Elastizität an dieser Stelle auch dauerhaft gewährleistet werden, wenn hohe Temperaturen, wie sie bei einem Axialkolbenmotor 1 auftreten, beherrscht werden müssen.

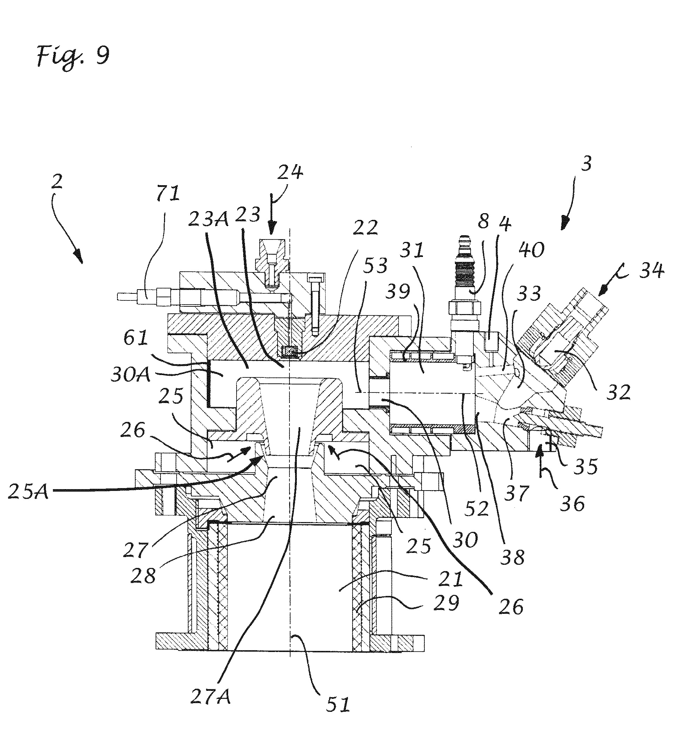

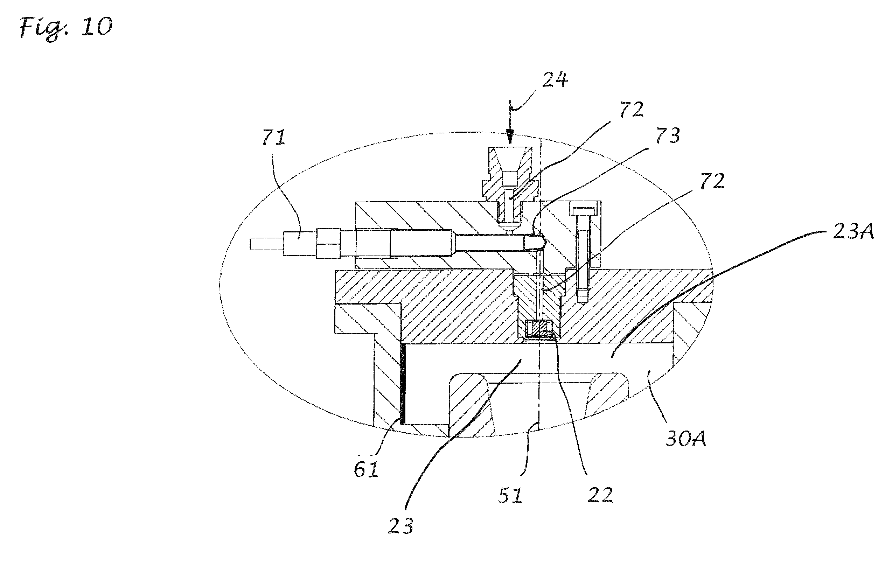

Der nach den Figuren 9 und 10 ausgeführte Hauptbrenner 2 verfügt über eine weitere Kraftstoffheizung, welche als Glühkerze 71 ausgestaltet ist. Die Glühkerze 71 befindet sich innerhalb der Kraftstoffleitung 72, wobei die Kraftstoffleitung 72 ein beheiztes Ende der Glühkerze 71 unter Bildung eines Heizraumes 73 umströmt und dort auf die gewünschte Kraftstofftemperatur beheizt wird. Der diesem Heizraum 73 über die Kraftstoffleitung 72 zugeführte Hauptbrennstoffstrom kann im stationären Betrieb den Kraftstoffheißstrom 75 des Kraftstoffwärmeübertragers 70 entnommen werden. Für einen Kaltstart jedoch, in welchem ausreichend Wärme in dem Kraftstoffwärmeübertrager 70 nicht dem Kraftstoff zugeführt werden kann, wird der der Hauptdüse 22 zugeführte Hauptbrennstoffstrom 24 über die dargestellte Glühkerze 71 beheizt. Ggf. kann die Temperaturregelung über die Glühkerze 71 erfolgen, während auf den Kraftstoffwärmeübertrager 70 verzichtet wird bzw. während der Kraftstoffwärmeübertrager 70 lediglich eine Grundenergie bereitstellt.

Es ist sofort ersichtlich, dass die spezifizierte Anordnung der Glühkerze 71 nach der vorstehend erläuterten Ausführungsform frei wählbar und eine liegende Anordnung in Bezug auf die Hauptbrennerachse 51 nicht notwendigerweise erforderlich ist. Die dargestellte Anordnung der Glühkerze 71 zu der Hauptbrennerachse 51 im Winkel von 90° ist allerdings vorteilhaft für den durch den Axialkolbenmotor 1 veranschlagten Bauraum, wobei diese liegende Anordnung die Gesamtlänge des Axialkolbenmotors unwesentlich negativ beeinflusst.

Denkbar sind in diesem Zusammenhang auch alternative Heizmittel, um den durch den Heizraum 73 strömenden Kraftstoff auf die gewünschte Temperatur zu beheizen. So kann anstelle der Glühkerze 71 auch ein Heizdraht in den Heizraum 73 oder entlang der Oberflächen des Heizraumes 73 geführt werden.

Weiterhin ist auch die dargestellte Ausgestaltung des Heizraumes 73 nicht notwendigerweise an die Ausgestaltung des Heizmittels gebunden. So kann der Heizraum 73, welcher der Form der Glühkerze angenähert ist, auch eine nicht zylindrische Form annehmen. Insbesondere kann von einer zylindrischen Ausgestaltung des Heizraumes 73 abgewichen werden, wenn dadurch die effektive Oberfläche des Heizraumes 73 in Verbindung mit einer in einer Heizraumwand eingelassenen Wärmequelle vergrößert werden kann.

**Bezugsziffernliste:**

| | | | |
|---|---|---|---|
| 1 | Axialkolbenmotor | 28 | Hauptbrennzone |
| 2 | Hauptbrenner | 29 | Hauptbrennraumwand |
| 3 | Vorbrenner | 30 | Heißgaszuführung |
| 4 | Hilfsheißgassensor | 30A | Ringraum |
| 5 | Heißgassensor | 31 | Vorbrennraum |
| 6 | Düsenraumsensor | 32 | Vordüse |
| 7 | Mischrohrsensor | 33 | Vordüsenraum |
| 8 | Zündkerze | 34 | Vorbrennstoffstrom |
| 9 | Lavaldüse | 35 | Vorluftleitung |
| 10 | Abtriebswelle | 36 | Vorluftstrom |
| 11 | Verdichterstufe | 37 | Vormischrohr |
| 12 | Expanderstufe | 38 | Vorbrennzone |
| 13 | Verdichterkolben | 39 | Vorbrennraumwand |
| 14 | Expanderkolben | 40 | Hilfsheißgaszuführung |
| 15 | Verdichtersteuertrieb | 44 | Abgasleitung |
| 16 | Expanderauslassventil | 51 | Hauptbrennerachse |
| 17 | Expandereinlassventil | 52 | Vorbrennerachse |
| 18 | Schusskanal | 53 | Zuführungsachse |
| 19 | Brennraumboden | 61 | Isolation |
| 21 | Hauptbrennraum | 70 | Kraftstoffwärmeübertrager |
| 22 | Hauptdüse | 71 | Glühkerze |
| 23 | Hauptdüsenraum | 72 | Kraftstoffleitung |
| 23A | Ringdüse | 73 | Heizraum |
| 24 | Hauptbrennstoffstrom | 74 | Kraftstoffkaltstrom |
| 25 | Hauptluftleitung | 75 | Kraftstoffheißstrom |
| 25A | Ringdüse | 76 | Abgasheißstrom |
| 25B | Düsenoberfläche | 77 | Abgaszwischenstrom |
| 26 | Hauptluftstrom | 78 | Abgaskaltstrom |
| 27 | Hauptmischrohr | 79 | Arbeitsgaskaltstrom |
| 27A | Mischdüse | 80 | Arbeitsgasheißstrom |
| 81 | Wärmeübertrager | | |
| 82 | Gehäuse | | |
| 83 | Abgaskammer | | |
| 84 | Arbeitsgaskammer | | |
| 85 | Schraubverbindung | | |
| 86 | Membran | | |
| 87 | Abgaskammereintritt | | |
| 88 | Abgaskammeraustritt | | |
| 89 | Arbeitsgaskammereintritt | | |
| 90 | Arbeitsgaskammeraustritt | | |

## Patentansprüche

1. Axialkolbenmotor (1) mit einem Wärmeübertrager (81), welcher einen Abgasstrom und einen von dem Abgasstrom getrennten Arbeitsgasstrom aufweist und welcher Wärme vom Abgasstrom auf den Arbeitsgasstrom überträgt, wobei der Wärmeübertrager (81) eine Längsachse aufweist, wobei der Wärmeübertrager (81) eine entlang der Längsachse verlaufende Arbeitsgaskammer (84) aufweist und wobei der Wärmeübertrager (81) eine entlang der Längsachse verlaufende Abgaskammer (83) aufweist, **dadurch gekennzeichnet, dass** ein Gehäuse (82) des Wärmeübertragers (81), die Arbeitsgaskammer (84) und/oder die Abgaskammer (83) an einem ersten Ende ihrer Längserstreckung mechanisch starr und an einem zweiten Ende ihrer Längserstreckung mechanisch elastisch miteinander gekoppelt sind.

2. Axialkolbenmotor (1) nach Anspruch 1, **dadurch gekennzeichnet, dass** die elastische Kopplung eine metallische Membran (86) aufweist.

3. Axialkolbenmotor (1) nach Anspruch 2, **dadurch gekennzeichnet, dass** die elastische Membran (86) die Arbeitsgaskammer (84), die Abgaskammer (83) und/oder das Gehäuse (82) des Wärmeübertragers (81) untereinander sowie gegen die Umgebung abdichtet.

4. Axialkolbenmotor (1) nach Anspruch 2 oder 3, **dadurch gekennzeichnet, dass** durch die Membran (86) ein Arbeitsgaskammereintritt (89) durchtritt, welcher einen Arbeitsgaskaltstrom (79) in den Wärmeübertrager (81) führt.

5. Axialkolbenmotor (1) nach einem der Ansprüche 1 bis 4, **dadurch gekennzeichnet, dass** die elastische Kopplung an einer kalten Seite des Wärmetauschers (81) vorgesehen ist.

6. Axialkolbenmotor (1) nach einem der Ansprüche 1 bis 5, **dadurch gekennzeichnet, dass** mechanisch starre Verbindung über eine Schraubverbindung (85) erfolgt.
